# EUROPEAN PATENT SPECIFICATION

(11) **EP 2 070 267 B1**
(45) Date of publication and mention of the grant of the patent: **10.11.2010**
(21) Application number: 07820169.6
(22) Date of filing: 13.09.2007
(51) Int. Cl.: H04L 12/56

(54) **METHOD OF RESOURCE RESERVATION IN A LOCAL AREA NETWORK COMPRISING A PLURALITY OF SUBNETS, CORRESPONDING COMPUTER PROGRAM PRODUCT, STORAGE MEANS AND DEVICE**
VERFAHREN ZUR BETRIEBSMITTELRESERVIERUNG IN EINEM LOKALEN NETZWERK, DAS MEHRERE SUBNETZE UMFASST, ENTSPRECHENDES COMPUTERPROGRAMMPRODUKT, SPEICHERMITTEL UND EINRICHTUNG
PROCÉDÉ DE RÉSERVATION DE RESSOURCE DANS UN RÉSEAU LOCAL COMPRENANT UNE PLURALITÉ DE SOUS-RÉSEAUX AINSI QUE PRODUIT DE PROGRAMME D'ORDINATEUR, MOYENS DE STOCKAGE ET DISPOSITIF CORRESPONDANTS

(30) Priority: 03.10.2006 FR 0608659
(43) Date of publication of application: 17.06.2009
(73) Proprietor: Canon Kabushiki Kaisha, Tokyo 146-8501 (JP)
(72) Inventor: VIGER, Pascal, F-35134 Coesmes (FR)
(74) Representative: Guéné, Patrick
(86) International application number: PCT/EP2007/059615
(87) International publication number: WO 2008/040617

(56) References cited:
- WO-A-03/003658
- DITZE M ET AL: "Resource Adaptation for Audio-Visual Devices in the UPnP QoS Architecture" ADVANCED INFORMATION NETWORKING AND APPLICATIONS, 2006. AINA 2006. 20TH INTERNATIONAL CONFERENCE ON VIENNA, AUSTRIA 18-20 APRIL 2006, PISCATAWAY, NJ, USA,IEEE, 18 April 2006 (2006-04-18), pages 543-547, XP010915420 ISBN: 0-7695-2466-4

## Description

### 1. Field of the Invention

The field of the invention is that of the transmission of data contents in a communications network.

More specifically, the invention relates to the control of the quality of service implemented in transmissions of this kind

### 2. Prior Art Solutions

The "Universal Plug and Play" standard (hereinafter designated as the UPnP standard) is aimed at enabling systems and apparatuses to be networked and work together simply and efficiently without preliminary configuration.

The apparatuses compatible with the UPnP standard are for example audio-video devices and personal computers (PCs) manufactured by various companies. These apparatuses can be integrated into a local IP (Internet Protocol) network such as a home network.

The UPnP standard provides an apparatus compatible with means of dynamic connection to an UPnP network (that implements the UPnP standard), enables it to discover the other compatible apparatuses of the network and enables it to communicate (or set forth) its own capacities.

The UPnP technology is based on the TCP/IP network protocol, the HTTP (HyperText Transport Protocol) and the XML (Extensible Markup Language) protocol.

An example of the prior art can be found in document WO 03/003 658.

The essential constituents of an UPnP network are the apparatuses, the services offered by these apparatuses and the control points. An UPnP apparatus (implementing the UPnP standard) can support several services, and is categorized according to the list of services (for example a video content server type service, a printer type service etc.) that it can provide. An UPnP apparatus explains the services that it can implement (referred to hereinafter as "its services") by means of an XML description file.

A service in an UPnP apparatus comprises a state machine, a control server and an event server. The state machine models a state of the service through the updating of state variables characterizing the apparatus. The control server receives the requests from remote apparatuses, executes the associated commands and updates the state machine. The event server orchestrates the broadcasting of this updating on the network to the UPnP apparatuses that have shown interest in this information.

An UPnP control point is capable of discovering and controlling UPnP apparatuses of the UPnP network. When a new apparatus is discovered by the control point, it obtains a description of this new apparatus, thus knows the services offered by the apparatus, asks for a precise description of each available service and finally sends requests for the control of the selected service. The control point can thus register with the event server in order to be notified of any change in state.

The "UPnP audiovisual" standard (hereinafter referenced "UPnP AV" standard) defines a set of UPnP apparatuses (for example television sets, VCR machines, DVD players, MP3 players, PCs etc.) with their associated services which are more specifically dedicated to the world of home digital audio/video devices.

The three main logic entities of an UPnP AV network (which implements the UPnP AV standard) are: a media server having access to multimedia contents which it can broadcast on the local network, a media player or media renderer (capable of locally playing back this type of multimedia contents received from the network) and a control point coordinating the operations.

The UPnP Quality of Service standard (hereinafter referenced UPnP QoS as described in the referenced document "UPnP QoS standard v1.0/v2.0") defines a set of UPnP services, relating to quality of service management, that are integrated into UPnP apparatuses. Three services are thus defined:
- the UPnP QosPolicyHolder service hereinafter called "QosPolicyHolder" which manages the Quality of Service (hereinafter called QoS) validated by a user and applied to the network;
- the UPnP QosDevice service hereinafter called "QosDevice " which is a service of an apparatus of the network used to receive QoS instructions to be applied to a datastream of a particular content; and
- the "UPnP QosManager" service hereinafter designated as "QosManager" which, upon a command from a control point wishing to set up a multimedia stream, is responsible for receiving the policy to be applied from the QosPolicyHolder informing the QoSDevices in the path of the stream of the actions to be taken.

The requests for Quality of Service (QoS) guarantees come from distributed multimedia applications that are no longer satisfied with the "best" service of the Ethernet. These applications range from simple data transfer to more complex applications such as telephony, video on request or multimedia conferencing.

The UPnP standard relies on the UDP (User Datagram Protocol) multicast protocol for its needs for discovering UPnP apparatuses and services. More specifically, the UPnP standard relies on the SSDP (Simple Service Discovery Protocol) which corresponds to the HTTP-on-UDP protocol whose messages are transmitted in multicast mode towards the address 239.255.255.250 and the port 1900.

Thus, an UPnP control point listens to this address to discover all the apparatuses and services of interest to it. The UPnP AV standard assigns the default value 4 to the TTL (Time-to-Live) field, which means that the messages transmitted in multicast mode may cross up to four routers of the local network. Ultimately, by default, an UPnP control point may control the stream traveling through 4+1 Ethernet sub-networks (or subnets).

The UPnP QoS standard is an emerging standard under specification. In particular, the UPnP QoS standard does not address the problem of the management of "complex" Ethernet networks, namely networks subdivided into several local subnets. Thus, in response to a resource reservation request from an UPnP control point, a QoSManager service is not capable of addressing a QoS policy (or resource reservation) from end to end for a stream going through several subnets of a local network.

As explained here above, the QoS guarantee requirement for multimedia streams (in terms of bandwidth and/or real-time criticality) is becoming increasingly important with the increase in the number of users' multimedia stations. However, it can be seen that, to fulfill this goal, there has to be coordination between apparatuses belonging to different subnets in order to deliver end-to-end QoS services.

Unfortunately, the UPnP QoS standard provides for no interaction between apparatuses belonging to different subnets.

### 3. Goals of the Invention

The invention is aimed *inter alia* at overcoming these drawbacks of the prior art in at least one of its embodiments.

More specifically, it is a goal of the invention to provide a technique of end-to-end QoS resource reservation without discontinuity during the transmission of a content on the transmission path crossing at least two subnets of a local network implementing a (UPnP QoS) centralized resource reservation protocol

It is another goal of the invention, in at least one of its embodiments, to implement a technique of this kind that is compatible with the recommendations of the protocols implemented.

The invention, in at least one of its embodiments, is also aimed at implementing a technique of this kind that is simple to implement and costs little.

### 4. Summary of the invention

According to one particular embodiment, the invention relates to a method of resource reservation in the context of the transmission of a data content on a transmission path between a source device and a sink device belonging to a communications network, said network comprising a plurality of subnets interconnected by at least one interconnection device possessing at least two communications interfaces connected to said subnets
said method being implemented by a higher manager device.

According to the invention, such a method comprises the following steps:
- a creation, for at least one of said communications interfaces, of at least one representation of an internal resource reservation service associated with said communications interface;
- a declaration that each service representation corresponds to a service for reservation of internal resources of the communications interface with which it is associated;
- reception of a first request for the reservation of internal resources, for the transmission of said content, intended for a service representation associated with a communications interface called a targeted communications interface;
- reservation of internal resources, for the transmission of the content in the device or devices, called device or devices to be reserved, of said transmission path which belongs or belong to at least one subnet that is not connected to the targeted communications interface.

The general principle of the invention consists of the creation of at least one representation of service (or service representation) between the subnets of a communications network (implementing a centralized resource reservation protocol) during the transmission of a content on a transmission path. These representations of service (through the receiving of resource reservation requests and their transmission to a higher manager device) enable the implementation of a internal resources reservation to be propagated from one subnet to another subnet on the transmission path.

Thus, the invention provides a technique for the reservation of QoS internal resources from end to end without discontinuity during the transmission of a content on a transmission path going through at least two subnets of a communications network implementing a centralized resource reservation protocol.

Furthermore, this resource reservation method is compatible with the recommendations of the protocols implemented (such as the QoS, UPnP, UPnP-Av and UPnP-QoS).

Advantageously, the internal resource reservation step comprises the following steps:
- determining whether at least one device to be reserved, known as a located device to be reserved, is located in the subnet of the higher manager device; and
- in the case of a positive determination, sending a second internal resource reservation request for the transmission of the content to each of the located device or devices to be reserved.

Thus, the reservation of internal resources is implemented in the subnet of the manager device.

Preferably, the resource reservation method also comprises the following steps:
- determining a device, called a remote manager device, included in the subnet, called a subnet of the remote manager device, that is connected to a communications interface of the interconnection device to which the targeted communications interface belongs but is distinct from the targeted communications interface; and
- sending the remote manager device a request for sending a third internal resource reservation request for the transmission of the content to the device or devices of the transmission path belonging to the subnet of the remote manager device.

Thus, the internal resource reservation is implemented in the given subnet.

Advantageously, prior to the internal resource reservation step, the method comprises the following step:
- determining a service representation, called a redundant service representation, that is associated with a communications interface of the interconnection device to which the targeted communications interface belongs but is distinct from the targeted communications interface.

Preferably, the resource reservation method furthermore comprises the following steps:
- the reception of a fourth internal resource reservation request, for the transmission of the content, intended for the redundant service representation; and
- the sending of a positive report of execution of said fourth request without said execution's being effective.

According to one characteristic of the invention, at the creation step, no representation of internal resource reservation service is created for the communications interface of the interconnection device or devices of the subnet comprising the higher manager device.

For example, the higher manager device carries out the internal resource reservation in its own subnet.

Advantageously, at the declaration step, no representation of internal resource reservation service is declared for the communications interfaces of the interconnection device or devices of the subnet comprising the higher manager device.

Preferably, each representation of internal resource reservation service locates the higher manager device by an Anycast type address.

According to one characteristic of the invention, the creation step is preceded by a step for detection of an appearance of at least one subnet in said network.

Advantageously, each representation of an internal resource reservation service includes a piece of information for identifying at least one device belonging to a subnet connected to a communications interface of the interconnection device to which the communications interface associated with said service representation belongs and which is distinct from the communications interface associated with said service representation.

Preferably, this resource reservation method furthermore comprises the following steps:
- detection of the withdrawal of a device, known as a withdrawn device, from a subnet; and
- modification of at least one service representation comprising a piece of information on identification of the withdrawn device.

Preferably, the resource reservation method furthermore comprises the following steps:
- detection of the addition of a device, called an added device, in a subnet; and
- modification of at least one service representation comprising a piece of information identifying an added device.

Preferably, the resource reservation method furthermore comprises the following steps:
- detection of the withdrawal of a subnet, known as a withdrawn subnet, from said network; and
- modification of at least one service representation comprising a piece of information on identification of a device or of devices of the withdrawn subnet.

Preferably, the resource reservation method furthermore comprises a step of destruction of at least one service representation that comprises no identification of a device included in a subnet connected to a communications interface of the interconnection device to which the communications interface associated with said service representation belongs and which is distinct from the communications interface associated with said service representation

Advantageously,
- said internal resource reservation service or services is/are a QoS device or devices according to the UPnP QoS protocol;
- said internal resource reservation requests are SetupTrafficQos messages according to the UPnP QoS protocol; and
- said request or requests for sending an internal resource reservation request is/are a RequestTrafficQos message or messages according to the UPnP QoS protocol.

The invention also relates to a computer program product comprising program code instructions for the execution of the steps of the resource reservation methods as described here above, when said program is executed on a computer.

The invention also relates to a computer-readable storage means storing a set of instructions executable by said computer to implement the resource reservation method as described here above.

The invention also relates to a higher manager device belonging to a communications network, said network comprising a plurality of sub-networks or subnets interconnected by at least one interconnection device possessing at least two communications interfaces connected to said subnets, said higher manager device comprising means of resource reservation in the context of the transmission of a data content on a transmission path between a source device and a sink device.

According to the invention, the higher manager device comprises:
- means of creation, for at least one of said communications interfaces, of at least one representation of an internal resource reservation service associated with said communications interface;
- means of declaration that each service representation corresponds to a service for reservation of internal resources of the communications interface with which it is associated;
- first means of reception of a first request for the reservation of internal resources, for the transmission of said content, intended for a service representation associated with a communications interface called a targeted communications interface;
- means of reservation of internal resources for the transmission of the content in the device or devices, called device or devices to be reserved, of said transmission path which belongs or belong to at least one subnet that is not connected to the targeted communications interface.

Advantageously, the internal resource reservation means comprise:
- first means for determining whether at least one device to be reserved, known as a located device to be reserved, is located in the subnet of the higher manager device; and
- first means for sending a second internal resource reservation request for the transmission of the content to each of the located device or devices to be reserved, said first means for sending a second internal resource reservation request being activated in the case of a positive determination by the first determining means.

Preferably, the higher manager device also comprises:
- second means for determining a device, called a remote manager device, included in the subnet, called a subnet of the remote manager device, connected to a communications interface of the interconnection device to which the targeted communications interface belongs but is distinct from the targeted communications interface; and
- second means for sending the remote manager device a request for sending a third internal resource reservation request for the transmission of the content to the device or devices of the transmission path belonging to the subnet of the remote manager device.

Preferably the higher manager device also comprises:
- third means for determining a service representation, called a redundant service representation, that is associated with a communications interface of the interconnection device to which the targeted communications interface belongs but is distinct from the targeted communications interface.

Advantageously, the higher manager device also comprises:
- second means for the reception of a fourth internal resource reservation request, for the transmission of the content, intended for the redundant service representation; and
- means for the sending of a positive report of execution of said fourth request without said execution being effective.

According to a preferred characteristic of the invention, the creation means do not create any representation of internal resource reservation service for the communications interfaces of the interconnection device or devices of the subnet comprising the higher manager device.

According to an advantageous characteristic of the invention, the declaration means do not declare any representation of internal resource reservation service for the communications interfaces of the interconnection device or devices of the subnet comprising the higher manager device.

Preferably, each representation of an internal resource reservation service includes means for locating the higher manager device by an Anycast type address.

Preferably, the higher manager device comprises means of detection of an appearance of at least one subnet in said network.

Advantageously, each representation of an internal resource reservation service includes a piece of information for identifying at least one device belonging to a subnet connected to a communications interface of the interconnection device to which the communications interface associated with said service representation belongs and which is distinct from the communications interface associated with said service representation.

Preferably, the higher manager device also comprises:
- means of detection of the withdrawal of a device, known as a withdrawn device, from a subnet; and
- means of modification of at least one service representation comprising a piece of information on identification of the withdrawn device.

Preferably, the higher manager device also comprises:
- means of detection of the addition of a device, called an added device, in a subnet; and
- means of modification of at least one service representation comprising a piece of information identifying an added device.

According to a preferred characteristic of the invention, the higher manager device also comprises:
- means of detection of the withdrawal of a subnet, known as a withdrawn subnet, from said network; and
- means of modification of at least one service representation comprising a piece of information on identification of a device or of devices of the withdrawn subnet.

Preferably, the higher manager device also comprises means of destruction of at least one service representation that comprises no identification of a device included in a subnet connected to a communications interface of the interconnection device to which the communications interface associated with said service representation belongs and which is distinct from the communications interface associated with said service representation

Advantageously,
- said internal resource reservation service or services is/are a QoS device or devices according to the UPnP QoS protocol;
- said internal resource reservation requests are SetupTrafficQos messages according to the UPnP QoS protocol; and
- said request or requests for sending an internal resource reservation request is/are a RequestTrafficQos message or messages according to the UPnP QoS protocol.

### 5. List of figures

Other features and advantages of the invention shall appear more clearly from the following description of a preferred embodiment, given by way of a simple illustrated and non-restrictive example, and from the appended figures, of which:
- Figure 1 is a drawing of a local network in which the resource reservation method according to a particular embodiment of the invention can be implemented;
- Figure 2 is a drawing of a generic apparatus implementing the resource reservation method according to the particular embodiment of the above-mentioned invention;
- Figure 3 is a drawing in the form of functional blocks of the generic apparatus 200 of figure 2 ;
- Figure 4 illustrates the principle of initialization of the higher QosManager in the local area network according to the particular embodiment of the invention;
- Figure 5 illustrates the principle of the QoS setup request during the transmission of the content c0 from the stream server to the customer terminal according to the particular embodiment of the invention;
- Figures 6A and 6B present algorithms for updating the topology of the local area network by the higher QoS manager according to the particular embodiment of the invention during the reception of messages of the routing protocol exchanged between the router devices (figure 6A) and during the reception of messages of the SSDP protocol (figure 6B);
- Figures 7A to 7C present algorithms implemented by the second service 302 of the higher QosManager 200 during the reception respectively of a request for obtaining information on the apparatuses of the transmission path of c0 "GetPathInformation" (figure 7A), a request for setting up the QoS on the path of c0 "SetupTrafficQoS" (figure 7B) and a QoS release request « ReleaseTrafficQos » (figure 7C) in the context of the transmission of c0 according to the particular embodiment of the invention;
- Figures 8A and 8B present algorithms implemented by the first service 301 of the higher QosManager 200 during the reception respectively of a request for obtaining a QoS setup « RequestTrafficQoS » (figure 8A) and a QoS release request « ReleaseTrafficQos » (figure 8B) in the context of the transmission of c0 according to the particular embodiment of the invention.

### 6. Description of an embodiment of the invention

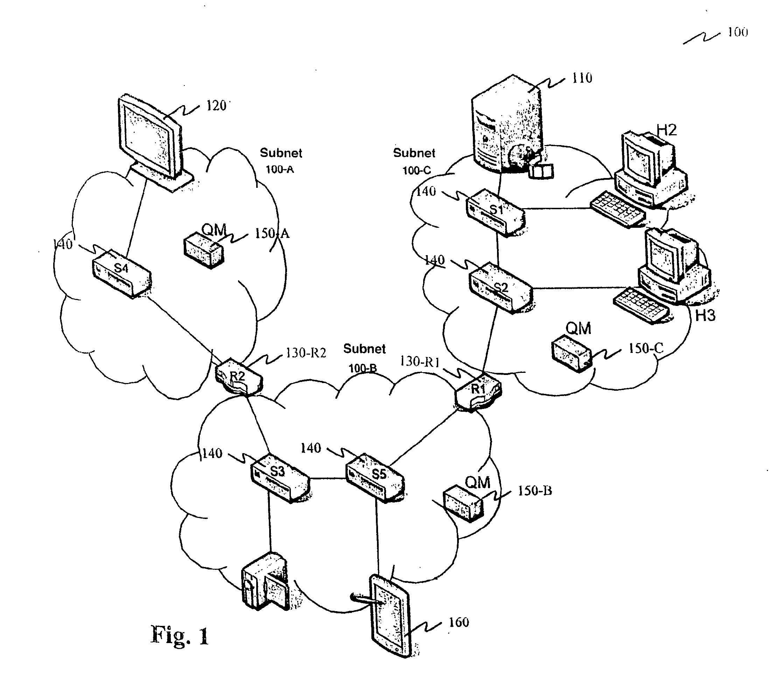

A description is provided below of the resource reservation method according to a particular embodiment of the invention in the context of a local network 100 (a drawing of which is shown in ***figure 1***) comprising especially apparatuses compliant with a centralized signaling protocol, for example the "UPnP QoS" protocol.

Naturally, the centralized signaling protocol may be any protocol other than the UPnP QoS. protocol.

The local area a network 100 is for example an Ethernet network implementing the IEEE 802 protocol (or any other type of IEEE 802-x type protocol) and enables the implementation of UPnP QoS type communications (at least between certain apparatuses) for which each "UPNP QoS apparatus (or apparatus implementing the UPnP QoS standard) of the network is identified and periodically communicates the description of its services.

The local area network 100 comprises both terminal apparatuses that are visible to the user (for example multimedia terminals of the local area network 100 which are directly controlled by the user) and network infrastructure apparatuses enabling links between these terminal apparatuses.

The local area network 100 has the particular feature of being constituted by three subnets 100A, 100B, 100C connected together by router devices 130-R1, 130-R2.

It will be noted that the local area network 100 may be a home network as well as a company local area network, partially or totally constituted by wireless segments, for example compliant with the "Wifi" or "Bluetooth" standards (registered marks).

The category of terminal apparatuses comprises especially:
- a multimedia stream server 110 responding to the UPnP AV standard (which is also called a "UPnP Media Server ") capable especially of continuously sending out video contents according to network protocols and working in connected mode (for example through HTTP on IP) and/or in non-connected mode (for example through RTP on UDP). This server may be a personal computer, a DVD reader or a camera with IP connectivity;
- a customer terminal 120, having a "UPnP Media Renderer" service, which may be a personal computer or a television screen capable of displaying the multimedia streams coming from the server 110;
- a UPnP control point 130 which may be, for example, a personal computer, a tablet PC, a personal digital assistant (PDA), a remote-control unit offering the user a selection of UPnP apparatuses on the local area network 100 and multimedia contents to be played back;
- computers such as those represented by H3 and H4.

The category of network infrastructure apparatuses includes especially interconnection apparatuses 140 which may be, for example:
- level 2 routing apparatuses (for example switches) which are interconnection devices having more than two Ethernet segments, according to a routing criterion based on the network level 2 (for example Ethernet MAC addresses);
- bridges between two segments of the network (for example a computer having two network cards constitutes a bridge).

These network infrastructure apparatuses 140 generally implement QoS protocols such as stream priority management protocols (for example the IEEE-802.1p protocol) or Qos online reservation signaling protocols such as the SBM protocol standardized by RFC-2814. They may also implement the UPnP QoS standard.

A bridge is a piece of interconnection hardware connecting two Ethernet segments. Each of the segments to which a bridge is connected has an associated table of MAC addresses of the terminal apparatuses of this segment which is managed by the bridge. Such a table is built by the bridge through a learning process in which, whenever a frame is sent by an apparatus, the bridge stores in the table, the MAC address of the terminal apparatus with respect to the segment concerned.

These tables enable the bridge to route the frames. Indeed, when the bridge receives a frame coming from its first segment, it relays the frame to its second segment in one of the following cases:
- the address of the intended recipient of the frame corresponds to an address of the second segment;
- this is a broadcast address;
- the address is not known to the bridge.

A switch is considered to be a bridge having more than two interfaces.

The category of network infrastructure apparatuses also comprises the router devices 130-R1, 130-R2. These are level 3 selector switch apparatuses hereinafter called "routers". A router is a machine having several network boards each connected to a different subnet. Thus, a router is a device for the interconnection of more than two ethernet segments according to a routing criterion based on the network level 3 (for example source and destination IP addresses).

Thus, the routers work through routing tables and routing protocols according to the following model:
- the router receives a frame coming from a machine connected to one of the networks to which it is attached;
- the datagrams are transmitted to the IP layer;
- the router analyses the header of the datagram;
- if the IP destination address belongs to one of the subnets to which one of the interfaces of the router is directly connected, the information must be sent to the layer 4 after the IP header has been unpackaged (removed) in order to carry out an address translation; this is called the NAT (Network Address Translation), a concept representing the modification of the IP addresses in the header of an IP datagram performed by a router. The router then sends the datagram on the concerned subnet.
- if the destination IP address is part of a subnet to which none of the interfaces of the router is directly connected, the router consults its routing table which is a table that defines the path to be taken for a given address; it thus determines which is the subnet, having a direct connection to one of these interfaces, through which the datagram must be sent, and then proceeds to send the datagram.

Services compliant with the UPnP QoS standard may be embedded in certain apparatuses of the local area network 100.

Here below, it is assumed that the multimedia stream server 110, customer terminal 120 and UPnP control point 160 have the "UPnP QosDevice" service available to them (here below they shall be designated as QosDevice apparatuses).

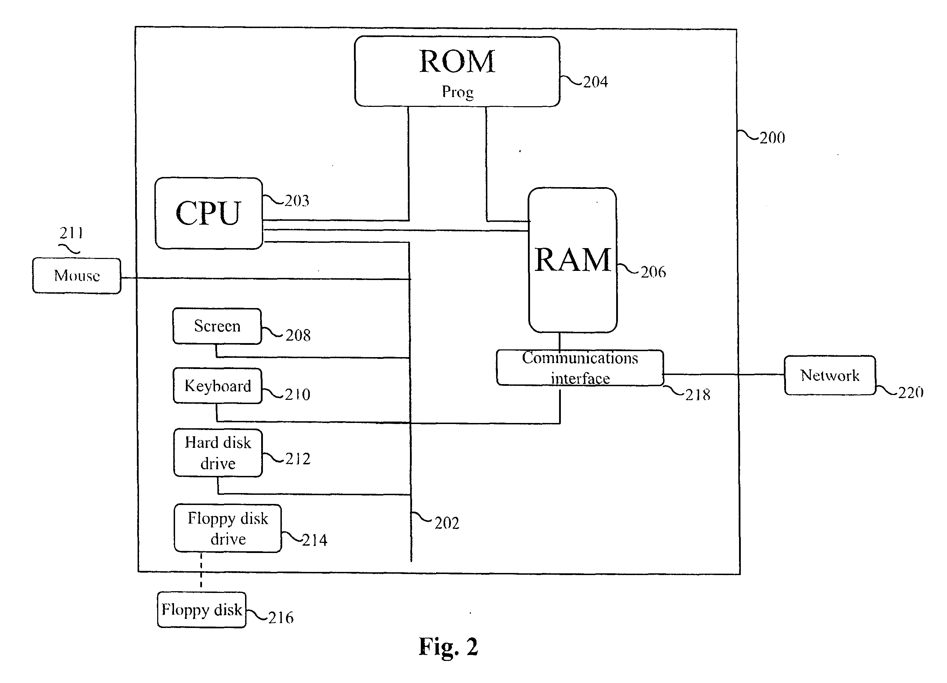

Furthermore, each local area network 100-A, 100-B and 100-C of the local area network 100 comprises a unique "UPnP QoSManager" service, respectively 150-A, 150-B and 150-C hereinafter designated as QoSManager 150-A, 150-B and 150-C (also called manager devices in the resource reservation context). These "UPnP QoSManager" services may be embedded in any apparatus preferably having a hardware platform identical to that of the generic apparatus 200 described here below with reference to figure 2. The UPnP QoS standard more specifically defines the procedures to be followed to choose the QosManager that is active if several services are in competition.

The QosManager services 150-A, 150-B and 150-C are responsible for the local management of the QoS resources in their own subnets, respectively 100-A, 100-B and 100-C. According to the UPnP QoS standard, they are not capable of managing the QoS outside their own subnets.

The following description relates to the resource reservation method according to the particular embodiment of the invention described here above, in a particular example of the transmission of a multimedia content (or stream) c0 on a transmission path between a source device (multimedia stream server 110) and a sink device (customer terminal 120) belonging to the local area network 100.

Thus, during the selection of the content c0 by the control point 160, a message (for example a message compliant with the UPnP-Av protocol, hereinafter designated as «Avt_SetAvTransportUri» or message 1) compliant with the UPnP protocol is sent to the customer terminal 120 in order to inform its "Media Renderer" service of the type of multimedia content c0 to be received.

At the same time, the control point 160 asks the QoSManager service 150-B of its subnet 100-B to prepare the QoS resources necessary for the proper routing of the multimedia content c0 between the stream server 110 and a customer terminal 120 (for example by means of a UPnP protocol compliant message hereinafter designated as "QM_RequestTrafficQos" or message 2).

The QosManager 150-B seeks to obtain the transmission path of c0 through the network in order to determine which are the QosDevice apparatuses to be informed of the reservation of resources to be made for the transmission of the content c0 (message 3).

If all the QosDevice apparatuses present on the transmission path of c0 accept the QoS characteristics of the content c0, the QosManager 150-B will carry out the request from the control point 160, and this control point will authorize the customer terminal 120 to play back the multimedia content c0 (for example by means of a UPnP-Av protocol compliant hereinafter designated as "Avt_Play" or message 4).

The customer terminal 120 will then send a multimedia stream read request to the stream server 110 (for example an RTSP type message in order to receive the multimedia stream in the RTP broadcast format).

The resource reservation method of the invention is implemented in the form of a software program and/or a plurality of software sub-programs (comprising a plurality of algorithms as described here below) which are executed in several machines of the local area network 100, for example in the higher QoSManager 200 (or higher manager device 200) described especially here below with reference to figure 2.

***Figure 2*** is a drawing of a higher QoSManager 200 implementing the resource reservation method according to the particular embodiment of the above-mentioned invention.

The description here below relates to the case where the higher QoSManager 200 is indistinguishable from or identified with the QosManager 150-A. However, the higher QoSManager may be identified with any other device of the local network 100 or even a device distinct from any device of the local area network 100 (for example a microcomputer or workstation).

This higher QoSManager 200 may be connected to any image, video or sound storage means connected to a graphic card and delivering multimedia data to the higher QoSManager 200.

Thus, the higher QoSManager 200 has a communications bus 202 to which the following are connected:
- a central processing unit 203 (for example a microprocessor referenced CPU);
- a read-only memory 204 referenced ROM, that could include the above-mentioned software program or programs referenced Prog;
- a random-access memory 206 (cache memory referenced RAM), comprising registers adapted to recording variables and parameters created and modified during the execution of the above-mentioned software program or programs;

- a screen 208 used to view data and/or serve as a graphic interface with the network administrator who may interact with the software program or programs of the invention through a keyboard 210 or any other means such as a pointing device, for example a mouse 211 or an optical pencil;
- a communications interface 218 connected to a distributed communications network 220, for example the local area network 100, the interface being capable of transmitting and receiving data.

The higher QoSManager 200 also has the following (but this is optional):
- a hard disk drive 212 that could include the software program or programs Prog;
- a floppy disk drive 214 adapted to receiving a floppy disk 216 and reading or writing therein data processed or to be processed in compliance with the resource reservation method of the invention. Naturally, instead of the floppy 216, it is possible to use any information carrier readable by a computer or a microprocessor that may or may not be integrated into the apparatus, possibly detachable, and adapted to the storage of the software program or programs according to the invention (for example a CD-ROM or a memory board).

The communications bus 202 enables communications and interoperability between the different devices included in the higher QoSManager 200 or connected to this apparatus.

More generally, through the communications bus 202, the central processing unit 203 is capable of communicating instructions to any device included in the higher QoSManager 200 directly or by means of any other device of the higher QoSManager 200.

The executable code of each of the above-mentioned software programs enabling the higher QoSManager 200 to implement the resource reservation method of the invention, may be stored for example in the hard disk drive 212 or in the read-only memory 204.

The central processing unit 203 controls and directs the execution of instructions or portions of software code of the software program or programs according to the invention. When the power is turned on, the software program or programs which are stored in a non-volatile memory (for example the hard disk drive 212 or the read-only memory 204) are transferred into the random-access memory 206 which will then contain the executable code of the software program or programs according to the invention, as well as registers to store the variables and parameters necessary for the implementation of the resource reservation method according to the invention.

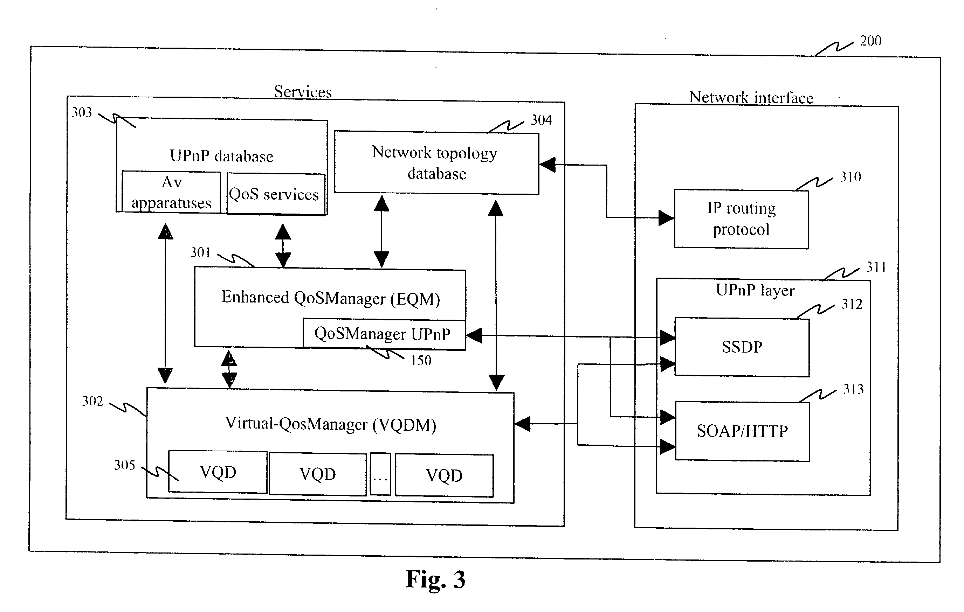

***Figure 3*** is a functional block diagram of the higher QosManager 200 of figure 2.

The higher QosManager 200 has network connectivity that possesses software stacks capable of interpreting different network protocols as well as services using the protocols.

First of all, it may be recalled that the router devices 130-R1, 130-R2 are interconnection devices used for the routing of information within a local area network consisting of a plurality of subnets. The exchange information through routing protocols called IGPs (Interior Gateway Protocols) such as the RIP (Routing Information Protocol) or the OSPF (Open Shortest Path First) protocol.

The RIP is incorporated into numerous UNIX operating systems. This is a very simple Distance Vector (Distance Vector Routers work by sending their neighbors the totality of their routing table). The routing table is transmitted in RIP packets, packaged in UDP datagrams. The port number used is 520. RIP packets have a maximum size of 512 bytes. If the routing table to be transmitted is bigger, it is sent in several packets. The RIP packets are broadcast.

The "Link State" technique has been developed to overcome the drawbacks of the "distance vector" technique. To this end, instead of sending their neighbors all the possible destinations, the routers send them packets describing the list of the links to which they are connected, as well as the cost associated with these links. These packets are called "link state packets" (LSP) or "link state advertisements" (LSA). The neighbors that receive these packets transmit them in turn to their neighbors (barring the neighbor that has sent the packet). These packets are sent during certain events such as a change in link state, a cost change or the arrival of a new router. These routers form a database by means of these packets and then compute a total "map" (or topology) of the network from which they can determine the best route from a given source to a given destination (the route for which the sum of the costs is the lowest). The routers discover their neighbors by themselves by sending "hello" packets to which the neighbors respond.

The higher QosManager 200 of the invention implements an IGP routing protocol represented by the block 310. Preferably but non-restrictively it will be the OSPF protocol because, in this way, a map of the subnet in which the higher QosManager 200 is situated is easier to make.

The messages received from the subnet are exploited so that the resulting pieces of information are stored locally in a network topology database 304 storing the network topology at level 3. Thus, the higher QosManager 200 acquires knowledge of a full topology of the local area network 100.

The block 301 described here below or, without distinction, the database 304 may also comprise an event manager capable of sending internal signals in order to notify the blocks 301-0302 (described here below) of modifications in the network topology.

Furthermore, a UPnP stack 311 is embedded in the higher QosManager 200 in order to support the mechanisms of the invention.

Thus, a first service 301 called "Enhanced QosManager" of the higher QosManager 200 is capable of interfacing with the UPnP stack 311 in order to discover the UPnP QoS services in all the subnets of the local area network 100 (by means of an SSDP interface 312 and of communicating with other QosDevice apparatuses (or apparatuses compatible with the UPnP QoS protocol) using for example a SOAP interface 313.

It will be noted that the Enhanced QosManager service 301 of the higher QosManager 200 of the invention is also capable of integrating the algorithms of a classic QosManager 150 service as defined by the UPnP QoS standard. This has the effect of proposing a local management of the QoS resources in the subnet in which the higher QosManager 200 is situated.

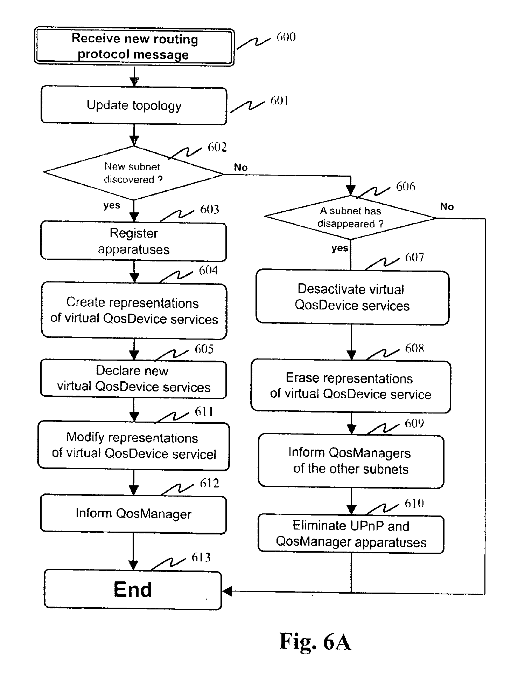

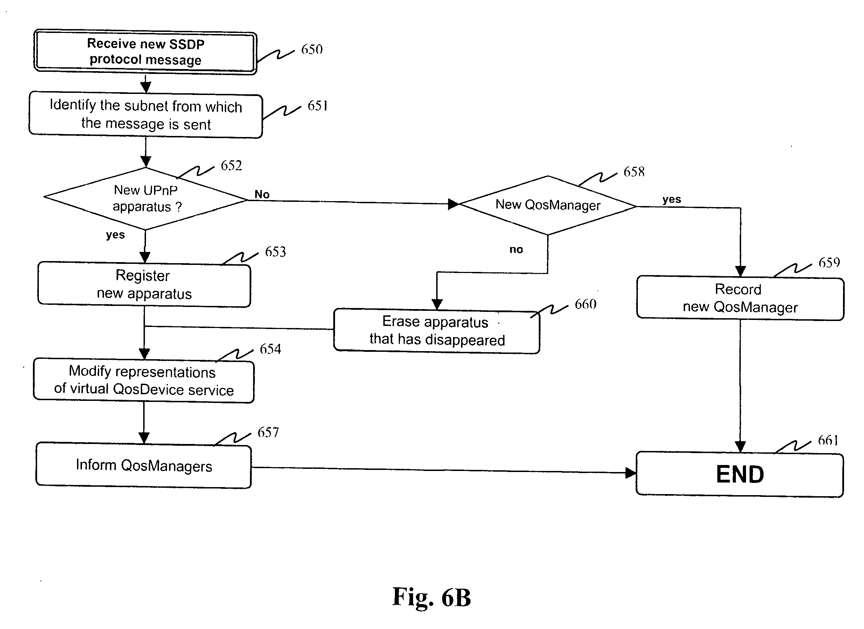

A second service 302 called a "Virtual-QosDevice Manager" service is executed by the higher QosManager 200. As described here below (with reference to figure 6) this second service 302 is capable of the following:
- generating representations of reservation of internal resources pertaining to virtual QosDevices 305 (or virtual apparatuses compatible with the UPnP QoS protocol) in the local area network 100;
- broadcasting SSDP messages on the network enabling the declaration of the presence of virtual QosDevice services 305, so that a classic QosManager service 150 somewhere in the network 100 will provide the second service 302 of the higher QosManager 200 with the information needed for the invention to be well implemented;
- broadcasting SSDP messages on the network enabling the declaration of modification of the previously declared virtual QoS services 305 when a change in topology takes place in the network 100.

It will be noted that, in the present embodiment of the invention, the first service 301 and the second service 302 are distinct solely for the purpose of clarifying the description. However, in one variant of this embodiment of the invention, the services may be the same.

For example, this first service 301 and second service 302 are implemented in object programming language and thus the second service 302 instantiates as many virtual QoS service 305 representation objects as are necessary. Each representation of a virtual QosDevice service 305 is perceived by the UPnP QoS devices of the network 100 as being a classic QosDevice service, and is directly accessible according to the UPnP and UPnP QoS protocol through the SSDP description that was given.

As explained here below (with reference to figure 6), as and when the topology of the network gets modified, the representations of virtual QosDevice service 305 are created and destroyed, and the corresponding UPnP and SSDP messages are sent to the subnet in which the presence of the virtual service 305 has been declared.

A UPnP database 303 of the higher QosManager 200 memorizes all the different services and apparatuses compatible with the UPnP protocol in the complete local area network 100. Preferably, this database can be used to obtain lists of machines and associated services according to numerous criteria such as the type of machine (for example a UPnP Av server), the nature of the UPnP QoS services available and the subnet in which this machine is situated.

This database is enhanced both by the first service 301 and by the second service 302.

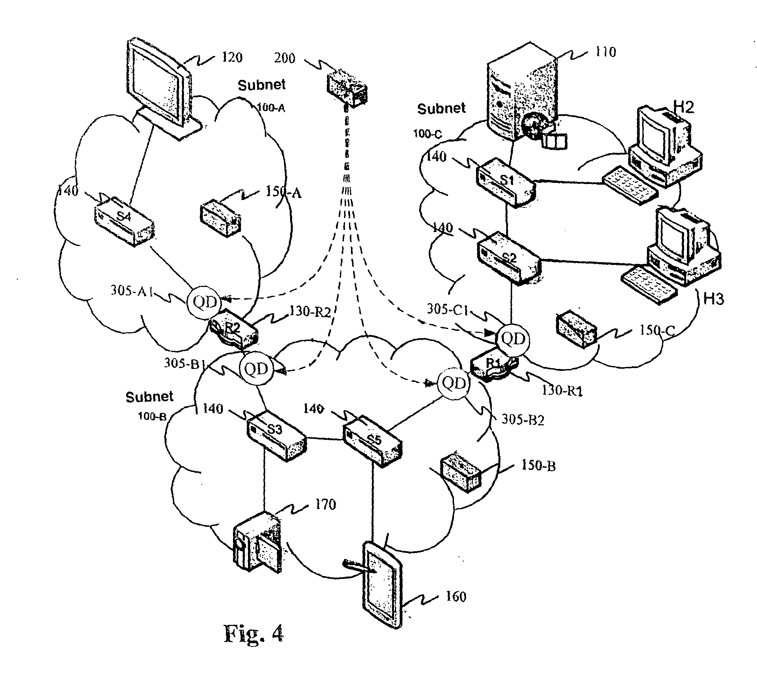

Referring to ***figure 4******,*** an illustration is provided of the principle of the initialization of the higher QosManager 200 in the local area network 100 according to the particular embodiment of the above-mentioned invention.

This figure 4 provides a schematic view of the locating of the virtual QosDevice services 305-A1, 305-B1, 305-B2, 305-C1 in the local area network 100. This location is the one perceived by the UPnP QosDevices such as the classic QosManagers 150 following the declaration of the virtual QosDevice services 305 made by the higher QosManager 200. In each subnet 100-A, 100-B and 100-C, the classic QosManager 150-A, 150-B and 150-C detects the presence of the virtual QosDevice services 305-A1, 305-B1, 305-B2, 305-C1 and communicates with them as if they were real QosDevice services present in their own subnet. These virtual QosDevice services 305-A1, 305-B1, 305-B2, 305-C1 are however created by the higher QosManager 200 and are physically present in the machine that hosts the higher QosManager 200 as indicated in figure 3. The actions performed by the higher QosManager 200 of the invention when it is started up are presented here below.

When starting up, the database 304 is enhanced upon arrival of information from the local area network 100 by the first service 301. An updating (described in detail here below with reference to figure 6) is carried out as a background task and an internal notification message may be sent out between the first service 301 and the second service 302 in the event of modifications of the topology (such as replacement of a router, apparatuses becoming inaccessible etc.).

The second service 302 consults the database 304 to determine the layout of the routers in the local area network 100. Thus, it knows the IP addresses of the apparatuses of each subnet 100-A, 100-B and 100-C, this information being a major criterion for the classification of the UPnP services and machines in the database 303.

The second service 302 then asks all the UPnP Av apparatuses of the entire network to make themselves known. This request is relayed by the SSDP protocol enabling the broadcasting of UPnP datagrams (or messages) of this type. It will be noted that the datagrams pass through the router devices 130-R1, 130-R2 and are therefore visible in all the subnets of the local area network 100 (with a maximum of four router devices crossed, which is amply sufficient for the current local area network 100). As mentioned already, the messages according to the UPnP standards (UPnP Av and UPnP QoS) can travel between several subnets. Unlike the UPnP Av standard, the UPnP QoS messages are not directly interpretable outside the subnet from which they are sent, for the information contained in these messages pertains to notions of QoS local to a subnet.

It can be noted that, in the case of the implementation of the classic UPnP protocol, the datagrams are sent by the UPnP control point 160.

As an option, if the database 304 indicates the presence of more than five consecutive IP segments, the TTL value of the IP packets conveying the SSDP messages could be increased in accordance with the number of segments found.

***Appendices 1 and 2*** give examples of SSDP messages for the discovery, respectively, of a UPnP-Av server (for example the stream server 110) and a UPnP-Av renderer apparatus (for example a customer terminal 120).

In the context of the present invention, these messages are used to obtain the localizing of the UPnP Av apparatuses in the different subnets 100-A, 100-B and 100-C.

Furthermore, the first service 301 gets to know all the other QosManager services 150-A, 150-B and 150-C available on the local area network 100. Simultaneously with the actions performed by the second service 302, the first service 301 sends SSDP requests on the network by means of the protocol stack 311.

***Appendix 3*** gives an example of an SSDP message for the discovery of a QosManager service.

During the reception of responses, the database 303 is updated.

It can be noted that, in the case of the implementation of the classic UPnP protocol, these datagrams are sent out by the UPnP control point 160 which seeks to know the QosManager 150-B in charge of its subnet 100-B and is unaware of the response datagrams coming from the other subnets 100-A and 100-C (IP addressing mask). In the context of the invention, these datagrams are sent out by the higher QosManager 200 in order to obtain knowledge of all the QosManager apparatuses present in the network 100, and the response datagrams coming from the other subnets are therefore not unknown.

According to the invention, the first service 301 classifies the information received from all the datagrams responding to this interrogation in the base 303.

Then, for each subnet, the service 302 creates the representations of the virtual QosDevice services 305-A1, 305-B1, 305-B2, 305-C1.

For example, for the subnet 100-A, the representation of a virtual QosDevice 305-A1 is created with the aim of simulating the presence of a QosDevice service present in the communications interface with the subnet 100-A of the interconnection apparatus 130-R2 situated at the boundary between the subnet 100-A and the subnet 100-B.

This virtual QosDevice service 305-A1 can be described as a bridge used to join together all the UPnP Av apparatuses laid out in the subnets accessible to the router devices 130-R2 by means of the communications services other than the one for which the virtual QosDevice service is associated (such apparatuses are, for example, a UPnP camera 170 of the network 100-B, the stream server 110 or the computers H2 and H3 of the subnet 100-C). In the case of the representation of a virtual QosDevice service 305-A1, the description corresponds to the apparatuses of the subnets 100-B and 100-C, which are accessible to the network 100-A through the router 130-R2 by its communications interface with the subnet 100-B.

***Appendix 4*** gives an example of an SSDP message for the notification of the presence of the virtual QosDevice service 305-A1.

The LOCATION field indicates the IP addresses of the apparatus integrating the virtual QosDevice service, in this case the machine hosting the higher QosManager 200. In the above-mentioned particular embodiment of the invention, this field LOCATION indicates an Anycast IP address instead of the real IP address of the machine hosting the higher QosManager 200 in order to mask its location. This mechanism enables the machine hosting the higher QosManager 200 to receive the messages sent by the classic QosManager 150 which are addressed to a virtual QosDevice service 305. The classic QosManager 150 could exclude the virtual QosDevice service 305 from the destination addresses of the QosManager messages since the address of the machine 200 hosting the higher QosManager indicates whether it is situated in a subnet other than the one that is covered by the UPnP QoS standard.

The Anycast protocol enables unicast transmission between a customer and the closest server identified by the Anycast address (in compliance with the RFC1546 protocol). The principle of the Anycast protocol is that the client seeks to communicate with a service (offered by several servers), and it does not matter which server responds to him. The network of routers is in charge of delivering the packets to the closest server (the Anycast protocol is supported by the RIP or OSPF routing protocols).

In order to distinguish the virtual QosDevice services, the URL of the LOCATION field is particularized in order to indicate the one concerned: for example, the string of characters («VQD») is added to the basic URL (« / ») followed by any index whatsoever that can be used to distinguish the virtual QosDevice service. Thus, access to the XML services is obtained relative to this new base.

The "GetPathinfonnat ion" request of the UPnP QoS standard is used to obtain information on the QosDevice apparatuses belonging to the transmission path for the content c0 and especially the MAC addresses of these QosDevice apparatuses. This type of information is used especially by the local QosManager to determine the transit path for the multimedia stream: all the UPnP QoS apparatuses of this path will then be required to set up a QoS for the stream. It is therefore important to let the classic QosManager 150 believe that the virtual QosDevice service is an apparatus on the path of the content c0, i.e. not to provide an indication in the description of the virtual QosDevice 305 that the machine hosting the service is located in a subnet distinct from that of the classic QosManager 150. For the subnet comprising the machine hosting the higher QosManager 200, the description of the virtual QosDevice 305 may contain the real IP address of this machine instead of the Anycast address.

***Appendix 5*** gives an example of a possible representation of a QosDevice apparatus implementing a bridge function between two Ethernet ports (the first attached to the local segment and the second giving access to the remote UPnP Av apparatuses).

The field "ReachableMac" lists the MAC addresses of the UPnP Av apparatuses accessible through the link, namely the apparatuses that are not simple interconnection apparatuses. In the above example, the router 130-R2 is considered. The link eth0 is connected to a first interface of the router device 130-R2 and the corresponding field "ReachableMac" lists the MAC addresses of the UPnP Av devices of the subnet 100-A, i.e. the device 120. The link eth1 is connected to an interface of the router device 130-R2, and the corresponding field "ReachableMac" then lists the MAC addresses of all the other UPnP Av apparatuses laid out in the subnets 100-B and 100-C, i.e. the devices 160, 170, 100, H and H2 should each of them be effectively UPnP Av devices.

According to a particular mode of implementation of the invention, the first service 301 may ask the SSDP stack 312 to send back notifications to it of the presence of QosDevice services in the local area network 100. The first service 301 then seeks to classify them in the database 303 according to their membership in their respective subnets, and thus during an interrogation by the "GetPathInformation" action, the field "ReachableMac" could contain the MAC addresses of the QosDevice elements of the subnet or subnets referred to by the current virtual QosDevice service representation.

The presence of other UPnP Av apparatuses in the subnet 100-B (the representation of the virtual QosDevice service 305-B1 gives the list of the UPnP Av apparatuses of the subnet 100-A; the representation of the virtual QosDevice service 305-B2 gives the list of the UPnP Av apparatuses of the subnet 100-B) and in the subnet 100-C (the representation of the virtual QosDevice service 305-C1 gives the list of the UPnP Av apparatuses of the subnets100-A and 100-B) will be exported in the same way.

Finally, the representations of virtual QosDevice services, although internal to the higher QosManager 200, are perceived by the other apparatuses as real services as laid out in the local area network 100 illustrated in figure 4.

In the case of another subnet-based local area network implementing the invention, if no QosManager is detected in the subnet in which the higher QosManager 200 is positioned, then since the higher QosManager 200 implements a QosManager service, it is not necessary to create any virtual QosDevice service representation in this subnet. For it is certain in this case that the QosManager service interrogated for the QoS requirements will be that of the higher QosManager 200 and that, through its knowledge of the complete topology of the network 100, it will be capable of contacting each of the classic QosManagers 150 of the other subnets in order to reserve resources for the entire transmission path of the content.

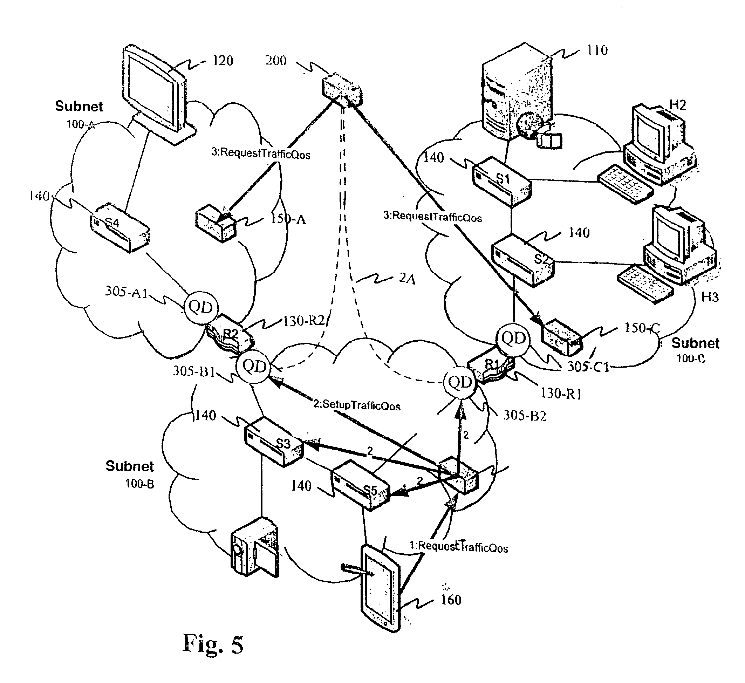

***Figure 5*** illustrates the principle of the request for setting up QoS doing the transmission of the content c0 from the stream server 110 to the customer terminal 120 according to the particular embodiment of the invention.

Figure 5 presents the QoS setup commands received by the higher QosManager 200 of the invention (following the initialization phase described here above with reference to figure 4) coming from the QosManager 150-B, and the impact of the actions performed by the higher QosManager 200 following this QoS request. The procedure is similar for QoS setup commands coming from the QosManager 150-C.

According to the UPnP QoS standard, the control point 160 decides on a type of multimedia traffic to be communicated between a source device and a sink device. In the present example, the customer terminal 120 and the stream server 110 are situated in two distinct subnets 100-A and 100-C and the control point 160 is situated in a third subnet 100-B.

However, any other distribution of the source device, sink device and control point in several subnets of the local area network 100 can be envisaged within the framework of the invention.

At an initial stage, the control point 160 (step 1) asks the QosManager 150-B (which is situated in the same subnet as the control point), in a standardized message "RequestTrafficQoS", to set up a QoS policy for the transmission of the specified multimedia content c0. The standardized message "RequestTrafficQos" contains information on the characteristics of the stream c0 as well as the destination (customer terminal 120) and the source (stream server 110). The UPnP QoS standard described the XML structure called a "TrafficDescriptor" characterizing the content c0.

The "TrafficDescriptor" structure described by the UPnP QoS standard comprises two optional fields: "QosBoundarySourceAddress" and "QosBoundaryDestinationAddress".

The "QosBoundarySourceAddress" field is dedicated to the case where a content is sent from a terminal situated outside the local area network (or, by extension, outside the subnet of the control point). In this case, the control point must give the IP address of the boundary for the application of QoS in the direction of the source.

The "QosBoundaryDestinationAddress" field is dedicated to the case where a content is intended for a terminal situated outside the local area network (or, by extension, outside the subnet of the control point). In this case, the control point must give the IP address of the boundary for the application of QoS in the direction of the destination.

In compliance with the UPnP QoS standard, these two fields are used by the QosManager service of the subnet when it takes decisions on the determining of the transmission path taken by the stream and the selection of the QoS apparatuses on this transmission path.

The principle of the invention is not affected by the presence or absence of these fields when a QoS request is sent from the control point 160.

Only the QosManager 150-B, whose knowledge of the network 100 is limited to the network 100-B, may experience difficulties in setting up the QoS for the transmission of the stream because the limits of application in the subnet 100-B have not been indicated to it. For the higher QosManager 200, which has all the capacities for knowing the total topology of the network 100, these pieces of information are optional: it will base its action on the IP addresses of the ends of the transmission path for the stream (customer 120, server 110) to determine the action to be applied for each subnet. Similarly, through a "GetPathInfbrmation" request, the QosManager 150-B will obtain the desired information from the virtual QosDevice apparatuses 305-B1 and 305-B2, whose representations respectively list the device 120 and the device 110.

Then, the QosManager 150-B tries to find the transmission path for the content c0 which is constituted by QosDevice apparatuses of the subnet 100-B that are present on the transmission path of c0 (for example of the devices 140 of the subnet 100-B).

In the context of the "GetPathlnformation" request sent by the QosManager 150-B, the virtual QosDevices 305-B1 and 305-B2 are deemed to form part of the list of these QosDevice apparatuses of the subnet 100-B under the responsibility of the QosManager 150-B.

Then a "SetupTrafficQos" message is sent (step 2) to all the QosDevices concerned (i.e. those belonging to the transmission path) in the subnet, including the virtual QosDevices 305-B1 and 305-B2 generated by the higher QosManager 200.

This "SetupTrafficQos" message is then received by the virtual QosDevice services 305-B1 and 305-B2 which in turn (step 2A) forward this request internally to the second service 302 of the higher QosManager 200.

Then the second service 302 :
- analyses the information in this request "SetupTrafficQos";
- detects the location of the customer terminal 120 and of the stream server 110; and
- through knowledge of the topology of the local area network 100 given by the database 304, knows the subnets (other than the subnet 100-B of the QosManager 150-B and of the control device 160) 100-A and 100-C concerned by the passage of the content c0.

By the cross-referencing with the database 303, the QosManager 150-A and 150-C services of these subnets 100-A and 100-C are selected and then informed (step 2) in a request ""RequestTrafficQos" of the need for setting up QoS for the multimedia stream. The "RequestTrafficQos" request used is of the same type as the one sent by the control point 160 and therefore has a range limited to each subnet.

The UPnP standard specifies that the RequestTrafficQos request contains for example an indication on the characteristics of the content c0 to be transmitted (XML TrafficDesriptor), which corresponds to those received by the QosManager of the concerned network coming from the control point.

The "QoSBoundarySourceAddress" and "QosBoundaryDestinationAddress" fields of the TrafficDescriptor structure may be different from those originally proposed by the control point 160. Should the transmission path of the content start outside the concerned subnet, the value specified in the "QosBoundarySourceAddress" field may be the IP address of a router device enabling communication with the source. Should the transmission path of the content end outside the concerned subnet, the value specified in the "QosBoundaryDestinationAddress" field may be the IP address of a router device enabling communication with the destination.

Thus, each QosManager 150-A and 150-C service has the task of locally managing the QoS resources proper to its respective subnet 100-A and 100-C, the QosManager 150-B service having taken responsibility for the management of the subnet 150-B.

However, the higher QosManager 200 must avoid redundancy of resource reservations for a same content. Indeed, the QosManagers 150-A and 150-C of these subnets 100-A and 100-C will send a "SetupTrafficQos" request to the virtual QosDevices that have declared themselves on the subnet and are located on the transmission path of the content. The higher QosManager 200 will then have to single out the requests addressed to virtual QosDevices which correspond to subnets already taken into account for reservation of service for the transmission of the content. Thus, the higher QosManager 200 will make no resource reservations for the requests addressed to virtual QosDevices which represent the apparatuses of the subnet from which the "SetupTrafficQos" request processed in the step 2A was sent, namely the request that initiated the resource reservation procedure in the current subnet. The higher QosManager 200 can send back a positive report on execution of the request, even if it has not made the reservation, so that the classic QosManager 150-A or 150-C considers the resource reservation operation on the subnet to have taken place flawlessly.

Referring to the illustration of ***figure 5*****,** a "RequestTrafficQos" request is sent by the control point 160 to the QosManager 150-B to set up data transmission with quality of service from the device 110 to the device 120, respectively situated in the subnets 100-C and 100-A. The QosManager 150-B will then send a "SetupTrafficQos" request to the virtual QosDevices that have declared themselves on their subnet 100-B, i.e. the virtual QosDevices 305-B2 and 305-B1. These requests will be interpreted by the higher QosManager 200 which will see to the reservation of resources respectively for the subnets 100-C and 100-A. It will then contact QosManager 150-C by means of a "RequestTrafficQos" request. The QosManager 150-C will send "SetupTrafficQos" requests accordingly on the subnet, one of them addressing the virtual QosDevice 305-C1. Now, the virtual QosDevice 305-C1 represents subnets 100-A and 100-B. The resource reservation on the subnet 100-A is taken into account by the processing of the "SetupTrafficQos" request addressed to the virtual QosDevice 305-B1 and the resource reservation on the subnet 100-B is taken into account by the QosManager 150-B upon reception of the "RequestTrafficQos" request sent by the control point 160. The higher QosManager 200 then ought not to take account of the "SetupTrafficQos" request addressed to the virtual QosDevice 305-C1 in order to avoid redundancy of resource reservation for the transmission of data between the apparatus 110 and the apparatus 120. However, it could send the QosManager 150-C a positive report on execution of the reservation, so that the QosManager 150-C deems the resource reservation operation on its subnet to have taken place flawlessly.

As shown in figures 4 and 5, the resource reservation request according to the invention (which is transparent for the asker) is transmitted from the subnet from where it is sent out to the services compliant with the present invention. These services are then entrusted with propagating the QoS requirements in the other subnets concerned through processing operations specific to the invention performed by the higher QosManager 200.

***Figures 6A*** ***and*** ***6B*** present algorithms for updating the topology of the local area network 100 by the higher QosManager 200 according to the particular embodiment of the invention during the reception of routing protocol messages exchanged between the router devices 130-R1 and 130-R2 (figure 6A) at the reception the SSDP protocol messages (figure 6B).

These algorithms are executed especially in the context of the phase for initializing the higher QosManager 200 mentioned here above with reference to figure 4.

The algorithm of ***figure 6A*** is described here below.

In a step 600, at the reception of a new message compliant with the IGP routing protocol, the functional block 310, in implementing the IGP routing protocol, informs the network topology database 304 of the reception of this new routing protocol message.

In a step 601, the higher QosManager 200 records the topology modification indicated in this new message in the network topology database 304.

It is not the aim of the present invention to propose an architecture for the network topology database 304 because there are many existing solutions for managing the results of the routing protocols, and these solutions are dependent in particular on the routing protocol used (for example in the context of the OSPF protocol).

Network topology modifications are, for example, the appearance or disappearance of subnets.

In a step 602, the QosManager 200 verifies the detection of a new subnet from the new message of the routing protocol.

If a new subnet is detected, then in a step 603, the UPnP database 303 of the higher QosManager 200 registers the UPnP Av apparatuses and the UPnP QosManager services of this new subnet.

This architecture of the UPnP 303 database may be one of object orientation, in the sense that an object instance is created for each subnet and linked with two lists of objects, one (the list L2) referencing the UPnP Av apparatuses of the subnet and the other (list L1) referencing QosManager services for this same subnet. This database may also be an SQL type structured database possessing several tables (for example one table to identify the subnets, another table for the UPnP Av apparatuses and another table for the QosManager services). Cross-referencing between the tables by means of an appropriate SQL script enables the lists L1 and L2, specified beforehand, to be obtained instantaneously.

In a step 604, the event manager integrated into the UPnP database 304 informs the second service 302 of the detection of the new subnet in order that this second service 302 may create one or more representations of virtual QosDevice service 305 pertaining to the router devices or devices related to this new subnet. The second service 302 also memorizes the association of these virtual QosDevice services 305 with a preliminarily generated identifier of the new subnet.

In a step 605, the second service 302 asks that each virtual QosDevice 305 should be declared in the network (by means of SSDP notification messages).

In a step 611, the second service 302 also initiates a search for the UPnP Av apparatuses and QosManager services (SSDP search) to know the UPnP systems of the new subnet. This results potentially in a modification of already existing virtual QosDevice service representations. The appearance of a subnet in the network 100 enables access to new devices by means of the added interconnection device or devices, the devices becoming accessible by means of the communications interfaces of the interconnection devices already present in the network 100.

In a step 612, the second service 302 asks that each modified virtual QosDevice service 305 should be declared in the network (by means of SSDP notification messages). Then, in a step 613, the algorithm is ended.

If no new subnet is detected in the step 602 then, in a step 606, the higher QosManager 200 checks for the disappearance of a subnet from the new message of the routing protocol.

If no subnet has disappeared, then the algorithm is ended in a step 613.

If a subnet has disappeared then, in a step 607, the second service 302 identifies the virtual QosDevice services 305 of this subnet and asks them to inform the network 100 then they have been put out of service (for example through the sending of a message SSDP BYE) before erasing them in a step 608.

The virtual QosDevice services of the other subnets (which are still present) are informed that a subnet has disappeared through notification of the disappearance of the UPnP Av apparatuses and are modified accordingly.

In a step 609, the QosManagers of each of the subnets are informed that the virtual QosDevice services of their subnet has undergone a modification. A UPnP message "PathInformation" provides information on the modifications in the routing and on the accessibility of the apparatuses listed in the representations of virtual QosDevice services concerned by the modification.

Then, in a step 610, the UPnP Av apparatuses and the QosManager service or services that have disappeared are eliminated from the database 303.

The algorithm of ***figure 6B*** is described in detail here below.

In a step 650, a new message compliant with the SSDP protocol is received by the higher QosManager 200.

Then, in a step 651, the higher QosManager 200 identifies the subnet from which the message has been sent. To do so, it analyses the LOCATION field in the body of the SSDP message or the source addresses of the IP header and therefore obtains the IP address of the sender and hence the subnet in which this sender is situated.

In a step 652, the higher QosManager 200 checks that this new message is a message notifying the presence of a new UPnP apparatus (media server, renderer, player etc....) from the nature of this SSDP message.

Indeed, a descriptive field of this SSDP message contains an indication on the type of apparatus encountered. For example, it contains the following field:
USN: uuid:59dff867-9244-48fe-9fbd-a73312c90481::urn:schemas-upnp-org:device:MediaServer: 1.

In accordance with the present invention, it can be planned that if this apparatus is already known and referenced in the database 303, the algorithm is ended in a step 661 (this case is not shown in figure 6B).

If the new message is a message of notification of the presence of a new UPnP Av apparatus then, in a step 653, the higher QosManager 200 registers this new apparatus in the database 303 for the subnet on which the new apparatus depends.

The steps 654 and 657 described in detail here below are used to determine the virtual QosDevice services 305 that have to reflect the arrival of this new apparatus in the list of MAC addresses exported by the responses to the "GetPathInformation" requests.

In a step 654, for each subnet (apart from the one in which the new apparatus is located), the second service 302 searches for the virtual QosDevice services that represent the subnet to which the new apparatus belongs. These representations are then modified so as to reflect the presence of the new apparatus. For example, in the local area network 100, the appearance of a UPnP Av station such as the station H1 of the subnet 100-B is expressed by the modification of the virtual QosDevice services 305-A1 and 305-C1.

Then, in a step 657, the QosManagers of each other subnets are informed that the virtual QosDevice services of their subnet have undergone a modification, through the dispatch of UPnP event notification messages for the "PathInformation" event, usually according to the "UPNP QoS standard.

Then the algorithm is ended in a step 661.

In the step 652, if the new SSDP message is not a message of notification of the presence of a new apparatus then, in a step 658, the higher QosManager 200 checks that the new SSDP message is a message notifying the presence of the new QosManager service from the nature of this SSDP message.

To this end, this SSDP message contains for example one of the following fields:
- USN: uuid:59dff867-9244-48fe-9fbd-a73312c90486::um:schemas-upnp-org:device:QosManager:1 ;
- USN: uuid:59dff867-9244-48fe-9fbd-a73312c90486::urn:schemas-upnp-org:service:QosManager: 1.

If the new SSDP message is not a message of notification of the presence of a new QosManager service, then the algorithm deems it to be the case that an apparatus has disappeared from the network. Cases where the messages received do not relate to a change of QosManager, the appearance or disappearance of an apparatus are the object of a separate processing operation not shown here. The apparatus that has disappeared is then withdrawn from the database of the higher QosManager 200 (in a step 660) and the representations of virtual QosDevices are modified accordingly in the step 654. This modification is declared in the network 100 in the same way as in the case of the discovery of a new apparatus in the network and shall not be described in greater detail.

If the new SSDP message is a message of notification of the presence of a new QosManager service then, in a step 659, the higher QosManager 200 registers this new QosManager service in the database 303 to keep the characteristics used to access this service (identifier, IP address, URL) and the link with the subnet to which it belongs. Then, the algorithm is ended in a step 661.

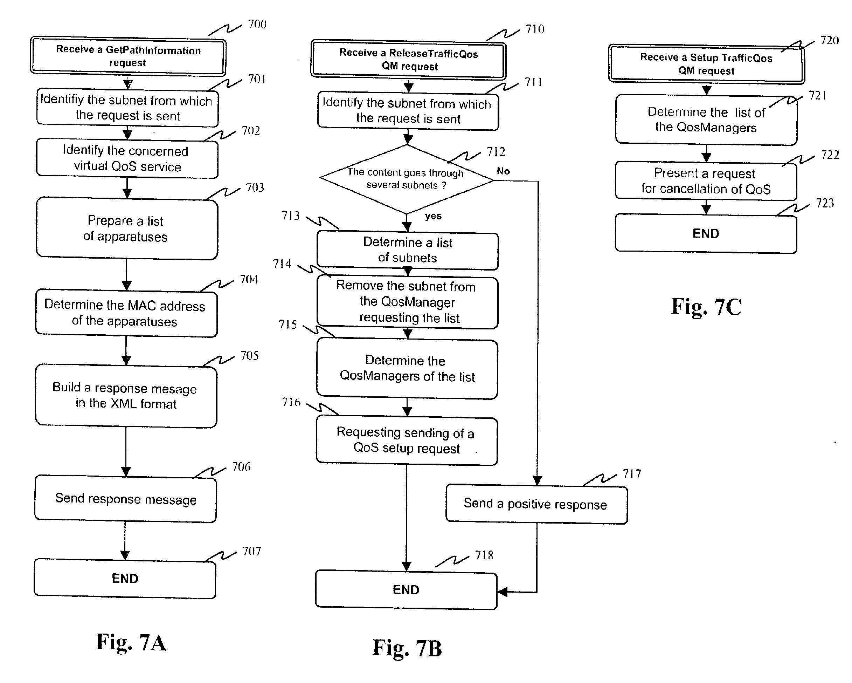

***Figures 7A to 7C*** present algorithms implemented by the second service 302 of the higher QosManager 200 during the reception respectively of a "GetPathInformation" request for obtaining information on the apparatuses of the transmission path of c0 (Figures 7A), a "SetupTrafficQoS" request for setting up QoS on the path of c0 (figure 7B) and a "ReleaseTrafficQoS" request for releasing QoS (figure 7C) in the context of the transmission of c0 according to the above-mentioned particular embodiment of the invention.

These UPnP protocol compliant requests come from a classic QosManager 150 on one of the subnets of the local area network 100 and reach the higher QosManager through the virtual QosDevices declared on the subnet for which the classic QosManager 150 is responsible. In the particular example mentioned here above, these requests come from the QosManager 150-B, following a QoS request for the transmission of a content coming from the control point 160.

The algorithm *of* *figure 7A* comprising the steps 700 to 707 represents the actions implemented by the second service 302 after the notification (step 700) by the UPnP stack 311 of reception of a "GetPathInformation" request (standardized for a UPnP QosDevice interface).

In a step 701, identical to the step 651 (mentioned here above with reference to figure 6) in which the second service 302 identifies the subnet of the requesting QosManager service, i.e. the QosManager service that has sent the request (QosManager 150-B in the particular example).

In a step 702, the second service 302 determines which representation of virtual QosDevice services is concerned by the request, for example by retrieval of the index of the virtual QosDevice services in the URL of the HTTP address used.

In a step 703, the second service 302 identifies the UPnP Av apparatuses of each of the subnets accessible from the representation of virtual QoS service identified beforehand in the steps 702, and makes the list of such apparatuses.

Each representation of a virtual QosDevice service knows its location in the local area network 100 through the machine that hosts it and hence, through the network topology database 304, it is capable of knowing the other subnets which it can access. Thus, the UPnP database 303 can then gives the list of UPnP Av machines (and their characteristics including the MAC address which is of interest to us here).

Preferably, the algorithm also comprises a step 704 in which the second service 302 obtains the MAC addresses of the apparatuses related to the representation of virtual QosDevice service preliminarily identified in the step 702. Reference could be made to the description of figure 4 which gives a detailed description of the filling of the XML response file.

In a step 705, the second service 302 builds an XML response message that is correctly formatted with the local MAC addresses of the subnet of the requesting QosManager and with the MAC addresses of the remote UPnP Av apparatuses obtained at the step 704 as represented in appendix 5 (already described).

Then, in a step 706, the second service sends this XML response message, and then the algorithm is ended in a step 707.

The algorithm of ***figure 7B*** comprising the steps 710 to 718 represents the actions implemented by the second service 302 after the notification (step 710) by the UPnP stack 311 of the reception of a "SetupTrafficQos" request (standardized for a UPnP QosDevice interface).

In a step 711, the second service 302 implements the above-mentioned step 701.

In a step 712, the second service checks whether the content c0 must go through several subnets during its journey on the transmission path. To do so, it consults the "SourceAddress" and "DestinationAddress" fields (mentioned here above with reference to figure 5) which contain the IP addresses of the source and sink devices of the content c0.

The network topology database 304 makes it easy to know whether or not the source and sink devices are apparatuses located in a same network.

If the content c0 must not go through several subnets then, in a step 717, a positive response is nevertheless sent to the requesting QosManager service 150 and then in a step 718, the algorithm is ended.

If the content c0 has to go through several subnets then, in a step 713, the database 304 determines a list of the subnets through which the content c0 travels in transit when it crosses the transmission path through the information preliminarily collected by the routing protocol 310.

Then, in a step 714, from the above-mentioned list of subnets, the second service 302 removes the subnet from which the request has come, namely the subnet in which the QosManager that has sent out the "SetupTrafficQos" message is located. For it is not necessary to inform it about the setting up of a QoS that it already knows locally.

In a step 715, the second service 302 determines the previously selected QoS manager services 150 from the database 303. This selection is stored along with the characteristics of the stream in order to enable rapid cancellation of the allocation of QoS resources when this is requested.

Then, in a step 716, the second service 302 requests the first service 301 to send a QoS setup request ("RequestTrafficQos") to each of these QosManager services of the list. It may be recalled that the description of the multimedia content is kept unlike the "QosBoundarySourceAddress" and "QosBoundaryDestinationAddress" which are liable to be updated as explained here above (with reference to figure 5). The higher QosManager 200 then acts as a remote control point for the QoSManagers 150 thus addressed, as already described with reference to figure 4.

The QosManager of each subnet retains control over the local QoS resources and may, if necessary, respond negatively to the request from the first service 301. In this case, and error message may be sent back in return for the message "SetupTrafficQos" which has been received by the higher QosManager 200 and has started this algorithm.

The higher QosManager 200 should however make sure that there is no redundancy of resource reservation for one and the same content transmission, as already explained with reference to figure 5.

In a preferred embodiment of the invention, the higher QosManager 200 does not perform the steps 713 to 715. As illustrated with reference to figure 5, the higher QosManager 200 will receive a "SetupTrafficQos" request for each of the virtual QoS device representations declared on the transmission path. It will be enough then for the higher QoS manager 200 to apply the resource reservation policy for the devices that are identified in the description of the virtual QoS device and are on the transmission path. The devices which are on the transmission path of stream and are not identified in the description of the virtual QoS device are identified in another virtual QoS device which too receives a "SetupTrafficQos" request. It is nevertheless true that the higher QosManager 200 must take care to prevent redundancy of resource reservations for one and the same content transmission, as already explained with reference to figure 5.

Then, the algorithm is ended in the step 718.

The algorithm of ***figure 7C*** comprising the steps 720 to 723 represents the actions implemented by the second service 302 after the notification (step 720) by the UPnP stack 311 of the reception of a "ReleaseTrafficQos" request (standardized for a UPnP QosDevice interface).

In a step 721, the second service 302 determines the transmission of content concerned by the "ReleaseTrafficQos" request and retrieves the stored list of the QosManager services which had been asked to set up a QoS in their respective subnets for this transmission of content.

Then, in a step 722, a request for cancellation of the QoS resource allocation ("ReleaseTrafficQoS") is presented to each of the QosManager apparatuses by the first service 301.

The higher QosManager 200 should nevertheless take care to prevent redundancy of the release of resources for a same transmission of content, as already explained with reference to figure 5 in the case of the redundancy of resource reservation.

In a preferred embodiment of the invention, the higher QosManager 200 does not perform the steps 713 to 715. There is therefore no step of storage of the QosManager apparatuses which had been requested to set up QoS in their respective subnets for this transmission of content. The higher QosManager 200 will receive a "ReleaseTrafficQoS" for each of the virtual QoS device representations declared on the transmission path. It will then be enough for this higher QosManager 200 to apply the resource release policy for the devices which are identified in the description of the virtual QoS device and which are on the transmission path of the stream. The devices which are on the transmission path of the stream and have not been identified in the description of the virtual QoS device identified in another virtual QoS device which itself will also receive a "ReleaseTrafficQoS" request. It is nonetheless true that the higher QosManager 200 must make sure to avoid the redundancy of resource releases for a same transmission of content, as explained already with reference to figure 5 in the case of a redundancy of resource reservation. Then, the algorithm is ended in a step 723.

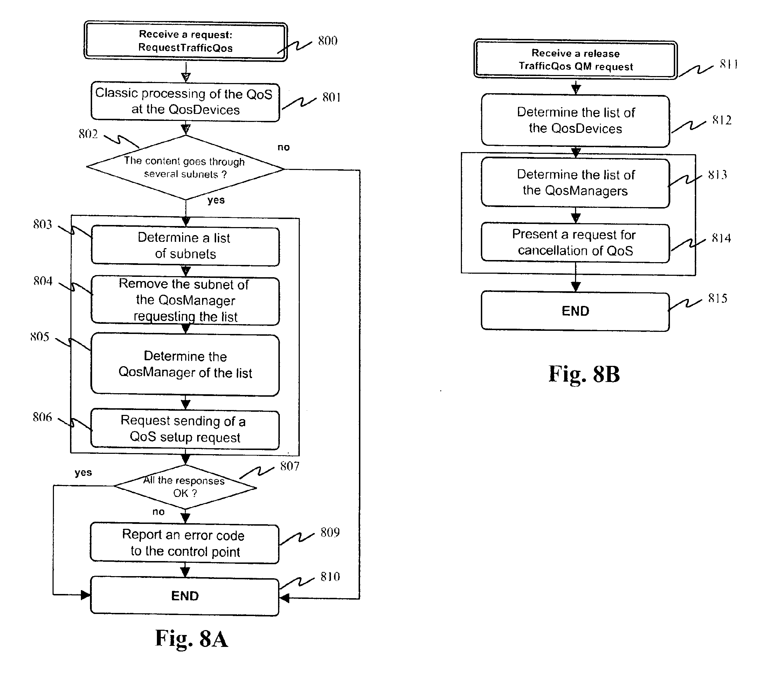

***Figures 8A and 8B*** present algorithms implemented by the first service 301 of the higher QosManager 200 during the reception respectively of a "SetupTrafficQoS" request for setting up QoS (figure 8A) and a "ReleaseTrafficQoS" request for releasing QoS (figure 8B) in the context of the transmission of the content c0 according to the above-mentioned particular embodiment of the invention.

These UPnP protocol compliant requests, from the control point 160, when it is located in the same subnet as the higher QosManager 200 and when the higher QosManager 200 is itself QosManager of the subnets to which it belongs. The UPnP QoS interface of the higher QosManager 200 is the same as that of a classic QosManager. However, the processes executed especially by the SOAP module 313 benefit from the advantages of the invention.

The algorithm of ***figure 8A*** comprising the steps 800 to 810 represents the actions implemented by the first service 301 after the notification (step 800) by the UPnP stack 311 of reception of a "GetPathlnformation" request (standardized for a UPnP QosDevice interface).

The UPnP protocol specifies that the "RequestTrafficQos" contains especially an indication on the characteristics of the content c0 to be transmitted (XML TrafficDesriptor structure), according to the information in possession of the control point 160.

This information will enable the first service 301, in a step 801, to carry out the classic QoS processing, within the subnet of the higher QosManager 200 (hereinafter called the current network), on the QosDevice apparatuses of this current subnet.

Then, the higher QosManager 200 implements its internal QosManager 150 service in order to validate the setting up of the QoS in the current subnet according to the recommendations of the UPnP QoS standard.

If the entire process takes place properly (i.e. if the QoS device services of the other apparatuses of the transmission path in the current subnet have accepted QoS setup) then in a step 802, the first service 301 checks that the content c0 must cross at least one subnet (other than the current subnet) during its journey on the transmission path. If the content c0 does not have to cross at least one other subnet then, in a step 810, the algorithm is ended and the first service 301 has behaved like a classic QoS manager service.

If the content c0 must cross at least one subnet (other than the current subnet), the steps 803 to 806 are implemented. They are identical to the steps 713 to 716 of figure 7 and are not described in detail herein.

Then, in a step 807, the first service determines if all the QosManager services of the other subnets (other than the current subnet) have responded positively to the QoS setup operation in their subnet.

If this is the case, the algorithm ends in the step 810. If not (before ending the algorithm in the step 810), in a step 809 an error code is reported in a return message to the control point 160 so that, if necessary, this control point proposes stream characteristics that are less restrictive.

The algorithm of ***figure 8B*** comprising the steps 811 to 815 represents the actions implemented by the first service 301 after the notification (step 811) by the UPnP stack 311 of the reception of a "ReleaseTrafficQos" request (standardized for a UPnP QosDevice interface).

In a step 812, the first service determines the transmission of content concerned by the "ReleaseTrafficQos" in order to retrieve the list of the QosDevice services of the local subnet concerned by this content, and ask them to release the resources if any that may be reserved for this content (this is the usual behavior of a QOsManager service 150 according to the "UPNP QoS standard). Then, the steps 813 and 814, which are identical to the steps 721 and 722 of figure 7, are implemented. Then the algorithm is ended in a step 815.

Those skilled in the art will understand that the variants introduced in the description of figures 7B and 7C remain applicable here.

Thus, through the different algorithms mentioned here above and from the elementary messages, the invention able to carry out a resource reservation requested by a subnet control device for the transmission of content through different subnets of a local area network.

### APPENDIX 1

M-SEARCH * HTTP/1.1
MX: 3
ST: urn:schemas-upnp-org:device:MediaServer:1
HOST: 239.255.255.250:1900
MAN: "ssdp:discover"

### APPENDIX 2

M-SEARCH * HTTP/1.1
MX: 3
ST: urn:schemas-upnp-org:device:MediaRenderer:1
HOST: 239.255.255.250:1900
MAN: "ssdp:discover"

### APPENDIX 3

M-SEARCH * HTTP/1.1
MX: 3
ST: urn:schemas-upnp-orgaervice:QosManager:1
HOST: 239.255.255.250:1900
MAN: "ssdp:discover"

### APPENDIX 4

NOTIFY * HTTP/1.1
LOCATION: http://172.20.4.55:60221/VQD1/
HOST: 239.255.255.250:1900
SERVER: WINDOWS, UPnP/1.0
NTS: ssdp:alive
USN: uuid:466a31b4-f65f-462b-a3c3-c3e1648dbf7b::urn:schemas-upnp-org:service:QosDevice:1
CACHE-CONTROL: max-age=1800
NT: urn:schemas-upnp-org:service:QosDevice:1

### APPENDIX 5

```
 <DeviceReachableMacs
 xmlns="http://www.upnp.org/schemas/QosDevice.xsd">
   <LinkReachableMacs>
     <LinkId>eth0</LinkId>
     <BridgeId>Bridge0</BridgeId>
     <ReachableMac>112233aabb03</ReachableMac>
   </LinkReachableMacs>
   <LinkReachableMacs>
     <LinkId>ethl</LinkId>
     <BridgeId>Bridge0</BridgeId>
     <ReachableMac>112233aabb07</ReachableMac>
     <ReachableMac>112233aabb05</ReachableMac>
     <ReachableMac>112233aabb09</ReachableMac>
     <ReachableMac>112233aabb04</ReachableMac>
     <ReachableMac>112233aabb06</ReachableMac>
  </LinkReachableMacs>
 </DeviceReachableMacs>
```

## Claims

1. A method for resource reservation in the context of the transmission of a data content on a transmission path between a source device and a sink device belonging to a communications network, said network comprising a plurality of subnets interconnected by at least one interconnection device possessing at least two communications interfaces connected to said subnets,
said method being implemented by a higher manager device,
wherein the method comprises the following steps:
- creating, for at least one of said communications interfaces, at least one representation of an internal resource reservation service associated with said communications interface;
- declaring that each service representation corresponds to a service for reservation of internal resources of the communications interface with which it is associated;
the method being **characterized by** the steps of:
- receiving a first request for the reservation of internal resources, for the transmission of said content, intended for a service representation associated with a communications interface called a targeted communications interface;
- reserving internal resources, for the transmission of the content in the device or devices, called device or devices to be reserved, of said transmission path which belongs or belong to at least one subnet that is not connected to the targeted communications interface.

2. A resource reservation method according to claim 1, wherein the internal resource reserving step comprises the following steps:
- determining whether at least one device to be reserved, known as a located device to be reserved, is located in the subnet of the higher manager device; and
- in the case of a positive determination, sending a second internal resource reservation request for the transmission of the content to each of the located device or devices to be reserved.

3. A resource reservation method according to claim 2, also comprising the following steps:
- determining a device, called a remote manager device, included in the subnet, called a subnet of the remote manager device, that is connected to a communications interface of the interconnection device to which the targeted communications interface belongs but is distinct from the targeted communications interface; and
- sending the remote manager device a request for sending a third internal resource reservation request for the transmission of the content to the device or devices of the transmission path belonging to the subnet of the remote manager device.

4. A resource reservation method according to any of the claims 1 to 3 wherein, prior to the internal resource reservation step, the method comprises the following step:
- determining a service representation, called a redundant service representation, that is associated with a communications interface of the interconnection device to which the targeted communications interface belongs but is distinct from the targeted communications interface.

5. A resource reservation method according to claim 4, furthermore comprising the following steps:
- receiving a fourth internal resource reservation request, for the transmission of the content, intended for the redundant service representation; and
- the sending of a positive report of execution of said fourth request without said execution being effective.

6. A resource reservation method according to any of the claims 1 to 5 wherein, at the creating step, no representation of internal resource reservation service is created for the communications interface of the interconnection device or devices of the subnet comprising the higher manager device.

7. A resource reservation method according to any of the claims 1 to 5 wherein, at the declaring step, no representation of internal resource reservation service is declared for the communications interfaces of the interconnection device or devices of the subnet comprising the higher manager device.

8. A resource reservation method according to any of the claims 1 to 7, wherein each representation of internal resource reservation service locates the higher manager device by an Anycast type address.

9. A resource reservation method according to any of the claims 1 to 8, wherein each representation of an internal resource reservation service includes a piece of information for identifying at least one device belonging to a subnet connected to a communications interface of the interconnection device to which the communications interface associated with said service representation belongs and which is distinct from the communications interface associated with said service representation.

10. A resource reservation method according to claim 9, furthermore comprising the following steps :
- detecting the withdrawal of a subnet, known as a withdrawn subnet, from said network; and
- modifying at least one service representation comprising a piece of information on identification of a device or of devices of the withdrawn subnet.

11. A resource reservation method according to claim 10, furthermore comprising a step for destroying at least one service representation that comprises no identification of a device included in a subnet connected to a communications interface of the interconnection device to which the communications interface associated with said service representation belongs and which is distinct from the communications interface associated with said service representation.

12. A resource reservation method according to any of the claims 1 to 11, wherein :
- said internal resource reservation service or services is/are a QoS device or devices according to the UPnP QoS protocol;
- said internal resource reservation requests are SetupTrafficQos messages according to the UPnP QoS protocol; and
- said request or requests for sending an internal resource reservation request is/are a RequestTrafficQos message or messages according to the UPnP QoS protocol.

13. A computer program product comprising program code instructions for the execution of the steps of the resource reservation methods according to any of the claims 1 to 12, when said program is executed on a computer.

14. A computer-readable storage means storing a set of instructions executable by said computer to implement the resource reservation method according to any of the claims 1 to 12.

15. A higher manager device belonging to a communications network, said network comprising a plurality of sub-networks or subnets interconnected by at least one interconnection device possessing at least two communications interfaces connected to said subnets, said higher manager device comprising means for reserving resource in the context of the transmission of a data content on a transmission path between a source device and a sink device,
wherein the higher manager device comprises:
- means for creating, for at least one of said communications interfaces, at least one representation of an internal resource reservation service associated with said communications interface;
- means for declaring that each service representation corresponds to a service for reservation of internal resources of the communications interface with which it is associated;
the higher manager device being **characterized by** further comprising:
- means for receiving of a first request for the reservation of internal resources, for the transmission of said content, intended for a service representation associated with a communications interface called a targeted communications interface;
- means for reserving internal resources for the transmission of the content in the device or devices, called device or devices to be reserved, of said transmission path which belongs or belong to at least one subnet that is not connected to the targeted communications interface.

## Patentansprüche

1. Verfahren zur Reservierung von Betriebsmitteln in dem Kontext der Übertragung eines Dateninhalts auf einem Übertragungspfad zwischen einer Quelleneinrichtung und einer Senkeneinrichtung, die zu einem Kommunikationsnetzwerk gehören, wobei das Netzwerk eine Vielzahl von Subnetzen umfasst, die durch zumindest eine Zwischenverbindungseinrichtung, die zumindest zwei Kommunikationsschnittstellen aufweist, die mit den Subnetzen verbunden sind, miteinander verbunden sind,
wobei das Verfahren durch eine höhere Verwaltungseinrichtung implementiert wird, wobei das Verfahren die folgenden Schritte aufweist:
Erzeugen, für zumindest eine der Kommunikationsschnittstellen, von zumindest einer Darstellung eines Reservierungsdienstes eines internen Betriebsmittels, der mit der Kommunikationsschnittstelle verknüpft ist;
Feststellen, dass jede Dienstdarstellung einem Dienst zum Reservieren eines internen Betriebsmittels der Kommunikationsschnittstelle, mit der er verknüpft ist, entspricht;
**gekennzeichnet durch**
Empfangen einer ersten Anforderung für die Reservierung von internen Betriebsmitteln, für die Übertragung des Inhalts, die für eine Dienstdarstellung gedacht ist, die mit einer Kommunikationsschnittstelle, die eine Zielkommunikationsschnittstelle genannt wird, verknüpft ist;
Reservieren von internen Betriebsmitteln, für die Übertragung des Inhalts in der Einrichtung oder den Einrichtungen, die zu reservierende Einrichtung oder Einrichtungen genannt werden, des Übertragungspfades, die oder der zu zumindest einem Subnetz, das nicht mit der Zielkommunikationsschnittstelle verbunden ist, gehören oder gehört.

2. Betriebsmittelreservierungsverfahren gemäß Anspruch 1, wobei der Schritt zum Reservieren interner Betriebsmittel die folgenden Schritte umfasst:
Bestimmen, ob zumindest eine zu reservierende Einrichtung, die als eine lokalisierte zu reservierende Einrichtung bekannt ist, in dem Subnetz der höheren Verwaltungseinrichtung lokalisiert ist; und
in dem Fall einer positiven Bestimmung, Senden einer zweiten Reservierungsanforderung für interne Betriebsmittel für die Übertragung des Inhalts an jede der lokalisierten zu reservierenden Einrichtung oder Einrichtungen.

3. Betriebsmittelreservierungsverfahren gemäß Anspruch 2, ebenso mit den folgenden Schritten:
Bestimmen einer Einrichtung, die eine Fernverwaltungseinrichtung genannt wird, die in dem Subnetz enthalten ist, das ein Subnetz der Fernverwaltungseinrichtung genannt wird, die mit einer Kommunikationsschnittstelle der Zwischenverbindungseinrichtung verbunden ist, zu der die Zielkommunikationsschnittstelle gehört, aber von der Zielkommunikationsschnittstelle verschieden ist; und
Senden einer Anforderung zum Senden einer dritten Reservierungsanforderung für interne Betriebsmittel an die Fernverwaltungseinrichtung für die Übertragung des Inhalts an die Einrichtung oder Einrichtungen des Übertragungspfades, die zu dem Subnetz der Fernverwaltungseinrichtung gehört oder gehören.

4. Verwaltungsreservierungsverfahren gemäß einem der Ansprüche 1 bis 3, wobei, vor dem Reservierungsschritt von internen Betriebsmitteln, das Verfahren die folgenden Schritte aufweist:
Bestimmen einer Dienstdarstellung, die eine redundante Dienstdarstellung genannt wird, die mit einer Kommunikationsschnittstelle der Zwischenkommunikationseinrichtung verknüpft ist, zu der die Zielkommunikationsschnittstelle gehört, aber von der Zielkommunikationsschnittstelle verschieden ist.

5. Betriebsmittelreservierungsverfahren gemäß Anspruch 4, des Weiteren mit den folgenden Schritten:
Empfangen einer vierten Reservierungsanforderung für interne Betriebsmittel, für die Übertragung des Inhalts, die für die redundante Dienstdarstellung gedacht ist; und
Senden eines positiven Berichtes einer Ausführung der vierten Anforderung, ohne dass die Ausführung effektiv ist.

6. Betriebsmittelreservierungsverfahren gemäß einem der Ansprüche 1 bis 5, wobei, in dem Erzeugungsschritt, keine Darstellung eines Reservierungsdienstes von internen Betriebsmitteln für die Kommunikationsschnittstelle der Zwischenverbindungseinrichtung oder -einrichtungen des Subnetzes, das die höhere Verwaltungseinrichtung umfasst, erzeugt wird.

7. Betriebsmittelreservierungsverfahren gemäß einem der Ansprüche 1 bis 5, wobei, in dem Feststellungsschritt, keine Darstellung eines Reservierungsdienstes von internen Betriebsmitteln für die Kommunikationsschnittstellen der Zwischenverbindungseinrichtung oder -einrichtungen des Subnetzes, das die höhere Verwaltungseinrichtung umfasst, festgestellt wird.

8. Betriebsmittelreservierungsverfahren gemäß einem der Ansprüche 1 bis 7, wobei jede Darstellung eines Reservierungsdienstes von internen Betriebsmitteln die höhere Verwaltungseinrichtung durch eine Adresse einer "Anycast"-Art lokalisiert.

9. Betriebsmittelreservierungsverfahren gemäß einem der Ansprüche 1 bis 8, wobei jede Darstellung eines Reservierungsdienstes von internen Betriebsmitteln ein Stück von Informationen zum Identifizieren von zumindest einer Einrichtung umfasst, die zu einem Subnetz gehört, das mit einer Kommunikationsschnittstelle der Zwischenverbindungseinrichtung verbunden ist, zu der die Kommunikationsschnittstelle, die mit der Dienstdarstellung verknüpft ist, gehört, und die von der Kommunikationsschnittstelle, die mit der Dienstdarstellung verknüpft ist, verschieden ist.

10. Betriebsmittelreservierungsverfahren gemäß Anspruch 9, des Weiteren mit den folgenden Schritten:
Erfassen der Rücknahme eines Subnetzes, das als ein zurückgenommenes Subnetz bekannt ist, von dem Netzwerk; und
Modifizieren von zumindest einer Dienstdarstellung, die ein Stück von Informationen über eine Identifikation einer Einrichtung oder von Einrichtungen des zurückgenommenen Subnetzes umfasst.

11. Betriebsmittelreservierungsverfahren gemäß Anspruch 10, des Weiteren mit einem Schritt zum Zerstören von zumindest einer Dienstdarstellung, die keine Identifikation einer Einrichtung aufweist, die in einem Subnetz enthalten ist, das mit einer Kommunikationsschnittstelle der Zwischenverbindungseinrichtung verbunden ist, zu der die Kommunikationsschnittstelle gehört, die mit der Dienstdarstellung verknüpft ist, und die von der Kommunikationsschnittstelle, die mit der Dienstdarstellung verknüpft ist, verschieden ist.

12. Betriebsmittelreservierungsverfahren gemäß einem der Ansprüche 1 bis 11, wobei:
der Reservierungsdienst oder die Reservierungsdienste von internen Betriebsmitteln eine QoS-Einrichtung oder -Einrichtungen gemäß dem UPnP-QoS-Protokoll ist/sind;
die Reservierungsanforderungen von internen Betriebsmitteln SetupTrafficQos-Mitteilungen gemäß dem UPnP-QoS-Protokoll sind; und
die Anforderung oder Anforderungen zum Senden einer Reservierungsanforderung von internen Betriebsmitteln eine RequestTrafficQos-Mitteilung oder -Mitteilungen gemäß dem UPnP-QoS-Protokoll ist/sind.

13. Computerprogrammprodukt mit Programmcodeanweisungen für die Ausführung der Schritte des Betriebsmittelreservierungsverfahrens gemäß einem der Ansprüche 1 bis 12, wenn das Programm auf einem Computer ausgeführt wird.

14. Computerlesbares Speichermedium, das einen Satz von Anweisungen speichert, die durch den Computer ausführbar sind, um das Betriebsmittelreservierungsverfahren gemäß einem der Ansprüche 1 bis 12 zu implementieren.

15. Höhere Verwaltungseinrichtung, die zu einem Kommunikationsnetzwerk gehört, wobei das Netzwerk eine Vielzahl von Subnetzwerken oder Subnetzen umfasst, die durch zumindest eine Zwischenverbindungseinrichtung, die zumindest zwei Kommunikationsschnittstellen umfasst, die mit den Subnetzen verbunden sind, miteinander verbunden sind, wobei die höhere Verwaltungseinrichtung eine Einrichtung zum Reservieren von Betriebsmitteln in dem Kontext einer Übertragung eines Dateninhalts auf einem Übertragungspfad zwischen einer Quelleneinrichtung und einer Senkeneinrichtung umfasst, wobei die höhere Verwaltungseinrichtung umfasst:
eine Einrichtung zum Erzeugen, für zumindest eine der Kommunikationsschnittstellen, von zumindest einer Darstellung eines Reservierungsdienstes von internen Betriebsmitteln, der mit der Kommunikationsschnittstelle verknüpft ist;
eine Einrichtung zum Feststellen, dass jede Dienstdarstellung einem Dienst zur Reservierung von internen Betriebsmitteln der Kommunikationsschnittstelle, mit der er verknüpft ist, entspricht; **gekennzeichnet durch**
eine Einrichtung zum Empfangen einer ersten Anforderung für die Reservierung interner Betriebsmittel, für die Übertragung des Inhalts, der für eine Dienstdarstellung gedacht ist, die mit einer Kommunikationsschnittstelle verknüpft ist, die eine Zielkommunikationsschnittstelle genannt wird;
eine Einrichtung zum Reservieren von internen Betriebsmitteln für die Übertragung des Inhalts in der Einrichtung oder den Einrichtungen, die zu reservierende Einrichtung oder Einrichtungen genannt wird oder werden, des Übertragungspfades, der oder die zu dem zumindest einem Subnetz gehört oder gehören, das nicht mit der Zielkommunikationsschnittstelle verbunden ist.

## Revendications

1. Procédé de réservation de ressources dans le cadre de la transmission d'un contenu de données sur un chemin de transmission entre un dispositif source et un dispositif récepteur appartenant à un réseau de communication ledit réseau comprenant une pluralité de sous-réseaux interconnectés par un moins un dispositif d'interconnexion possédant au moins deux interfaces de communication connectées auxdits sous-réseaux,
ledit procédé étant mis en oeuvre par un dispositif gestionnaire supérieur, et en ce que le procédé comprend les étapes suivantes :
- création, pour au moins une desdites interfaces de communication, d'au moins une représentation de service de réservation de ressources internes associée à ladite interface de communication ;
- déclaration que chaque représentation de service correspond à un service de réservation de ressources internes de l'interface de communication à laquelle elle est associée ; ledit procédé étant **caractérisé en ce qu'**il comprend entre outre les étapes suivantes :
- réception d'une première requête de réservation de ressources internes, pour la transmission dudit contenu, destinée à une représentation de service associée à une interface de communication, dite interface de communication ciblée ;
- réservation de ressources internes, pour la transmission du contenu, dans le ou les dispositifs, dit(s) dispositif(s) à réserver, dudit chemin de transmission qui appartient(nent) à au moins un sous-réseau qui n'est pas connecté à l'interface de communication ciblée.

2. Procédé de réservation de ressources selon la revendication 1, **caractérisé en ce que** l'étape de réservation de ressources internes comprend les étapes suivantes :
- détermination si au moins un dispositif à réserver, dit dispositif à réserver localisé, est localisé dans le sous-réseau du dispositif gestionnaire supérieur ; et
- dans le cas d'une détermination positive, envoi d'une seconde requête de réservation de ressources internes pour la transmission du contenu à chacun du ou des dispositif(s) à réserver localisé(s).

3. Procédé de réservation de ressources selon la revendication 2, **caractérisé en ce qu'**il comprend également les étapes suivantes :
- détermination d'un dispositif, dit dispositif gestionnaire distant, compris dans un sous-réseau, dit sous-réseau du dispositif gestionnaire distant, connecté à une interface de communication du dispositif d'interconnexion auquel appartient l'interface de communication ciblée mais qui est distincte de l'interface de communication ciblée ; et
- envoi au dispositif gestionnaire distant d'une demande d'envoi d'une troisième requête de réservation de ressources internes pour la transmission du contenu au(x) dispositif(s) du chemin de transmission appartenant au sous-réseau du dispositif gestionnaire distant.

4. Procédé de réservation de ressources selon l'une quelconque des revendications 1 à 3, **caractérisé en ce que,** préalablement à l'étape de réservation de ressources internes, il comprend l'étape suivante :
- détermination d'une représentation de service, dite représentation de service redondante, qui est associée à une interface de communication du dispositif d'interconnexion auquel appartient l'interface de communication ciblée mais qui est distincte de l'interface de communication ciblée.

5. Procédé de réservation de ressources selon la revendication 4, **caractérisé en ce qu'**il comprend en outre les étapes suivantes :
- réception d'une quatrième requête de réservation de ressources internes, pour la transmission du contenu, destinée à la représentation de service redondante ; et
- émission d'un rapport positif d'exécution de ladite quatrième requête sans que ladite exécution ne soit effective.

6. Procédé de réservation de ressources selon l'une quelconque des revendications 1 à 5, **caractérisé en ce que,** lors de l'étape de création, il n'est pas créé de représentation de service de réservation de ressources internes pour les interfaces de communication du ou des dispositifs d'interconnexion du sous-réseau comprenant le dispositif gestionnaire supérieur.

7. Procédé de réservation de ressources selon l'une quelconque des revendications 1 à 5, **caractérisé en ce que,** lors de l'étape de déclaration, il n'est pas déclaré de représentation de service de réservation de ressources internes pour les interfaces de communication du ou des dispositifs d'interconnexion du sous-réseau comprenant le dispositif gestionnaire supérieur.

8. Procédé de réservation de ressources selon l'une quelconque des revendications 1 à 7, **caractérisé en ce que** chaque représentation de service de réservation de ressources internes localise le dispositif gestionnaire supérieur par une adresse de type Anycast.

9. Procédé de réservation de ressources selon l'une quelconque des revendications 1 à 8, **caractérisé en ce que** chaque représentation de service de réservation de ressources internes comprend une information d'identification d'au moins un dispositif appartenant à un sous-réseau connecté à une interface de communication du dispositif d'interconnexion auquel appartient l'interface de communication associée à ladite représentation de service et qui est distincte de l'interface de communication associée à ladite représentation de service.

10. Procédé de réservation de ressources selon la revendication 9, **caractérisé en ce qu'**il comprend en outre les étapes suivantes :
- détection du retrait d'un dispositif, dit dispositif retiré, d'un sous-réseau ;et
- modification d'au moins une représentation de service comprenant une information d'identification du dispositif retiré.

11. Procédé de réservation de ressources selon la revendication 10, **caractérisé en ce qu'**il comprend en outre une étape de destruction d'au moins une représentation de services qui ne comprend pas d'identification de dispositif compris dans un sous-réseau connecté à une interface de communication du dispositif d'interconnexion auquel appartient l'interface de communication associée à ladite représentation de service et qui est distincte de l'interface de communication associée à ladite représentation de service.

12. Procédé de réservation de ressources selon l'une quelconque des revendications 1 à 11, **caractérisé en ce que :**
- le ou lesdits service(s) de réservation de ressources internes est(sont) un(des) QosDevice(s) selon le protocole UPnP QoS ;
- lesdites requêtes de réservation de ressources internes sont des messages SetupTrafficQos selon le protocole UPnP QoS ; et
- la ou lesdites demande(s) d'envoi de requête de réservation de ressources internes est(sont) un(des) message(s) RequestTrafficQos selon le protocole UPnP QoS.

13. Produit programme d'ordinateur, **caractérisé en ce qu'**il comprend des instructions de code de programme pour l'exécution des étapes du procédé de réservation de ressources selon l'une quelconque des revendications 1 à 12, lorsque ledit programme est exécuté sur un ordinateur.

14. Moyen de stockage lisible par un ordinateur, stockant un jeu d'instructions exécutables par ledit ordinateur pour mettre en oeuvre le procédé de réservation de ressources selon l'une quelconque des revendications 1 à 12.

15. Dispositif gestionnaire supérieur appartenant à un réseau de communication, ledit réseau comprenant une pluralité de sous-réseaux interconnectés par un moins un dispositif d'interconnexion possédant au moins deux interfaces de communication connectées auxdits sous-réseaux, ledit dispositif gestionnaire supérieur comprenant des moyens de réservation de ressources dans le cadre de la transmission d'un contenu de données sur un chemin de transmission entre un dispositif source et un dispositif récepteur, ledit dispositif gestionnaire supérieur comprend :
- des moyens de création, pour au moins une desdites interfaces de communication, d'au moins une représentation de service de réservation de ressources internes associée à ladite interface de communication ;
- des moyens de déclaration que chaque représentation de service correspond à un service de réservation de ressources internes de l'interface de communication à laquelle elle est associée ; et en ce que ledit dispositif gestionnaire supérieur est **caractérisé en ce qu'**il comprend en outre :
- des premiers moyens de réception d'une première requête de réservation de ressources internes pour la transmission dudit contenu destinée à une représentation de service associée à une interface de communication, dite interface de communication ciblée ;
- des moyens de réservation de ressources internes, pour la transmission du contenu, dans le ou les dispositifs, dit(s) dispositif(s) à réserver, dudit chemin de transmission qui appartient(nent) à au moins un sous-réseau qui n'est pas connecté à l'interface de communication ciblée.
